# EUROPEAN PATENT SPECIFICATION

(11) **EP 3 206 542 B1**
(45) Date of publication and mention of the grant of the patent: **06.11.2024**
(21) Application number: 15784132.1
(22) Date of filing: 16.10.2015
(51) Int. Cl.: A47J 31/057, A47J 31/30

(54) **COFFEE-MAKING APPARATUS AND METHOD**
KAFFEEHERSTELLUNGSVORRICHTUNG UND -VERFAHREN
APPAREIL POUR PRÉPARER LE CAFÉ ET PROCÉDÉ ASSOCIÉ

(30) Priority: 16.10.2014 GB 201418375; 16.10.2014 GB 201418376
(43) Date of publication of application: 23.08.2017
(73) Proprietor: Giocoguado Ltd., Cambridge, Cambridgeshire CB4 1AW (GB)
(72) Inventor: PLAYFORD, William, Cambridge Cambridgeshire CB4 1AW (GB)
(74) Representative: Reddie & Grose LLP
(86) International application number: PCT/GB2015/053082
(87) International publication number: WO 2016/059426

(56) References cited:
- EP-A2- 0 808 597
- WO-A1-2013/032104
- FR-A1- 2 186 209
- FR-A1- 2 347 014
- US-A1- 2003 066 430

## Description

The invention relates to a coffee-making apparatus and a method of making coffee, particularly espresso coffee.

### Background to the invention

In order to produce espresso coffee, hot water is brought into contact with a source of coffee, typically ground coffee beans, such that a brewing process can occur. In order to extract the optimum aroma of the coffee into the resulting beverage, espresso brewing is carried out under certain conditions of temperature and pressure. It is widely accepted that for espresso coffee the ideal brew temperature range is between 90C and 96C, while the ideal brew pressure range is between 7 bar and 11 bar gauge pressure (8 bar and 12 bar absolute pressure), and preferably about 9 bar gauge pressure. It is also important to arrange the source of coffee in such a way that brew water percolates evenly through the source of coffee, to ensure even extraction of flavour in the resulting beverage.

Gauge pressure is zero-referenced to atmospheric pressure, while absolute pressure is zero-referenced to a vacuum. Both are measured in units of bar, where 1 bar is equivalent to 100 kilopascals, or 100kPa. A pressure of 0 bar gauge pressure is equivalent to ambient air pressure, which is roughly equivalent to 1 bar absolute pressure. All pressures referred to herein are gauge pressures unless specified otherwise.

Conventional espresso coffee machines are electrically operated and achieve the desired brew conditions by independently controlling the brew pressure and brew temperature through separate control systems. These machines typically achieve the desired brew temperature either by maintaining a constant supply of brew water at the desired temperature in a boiler, or by heating a small amount of brew water on demand within a heat block. Brew pressure is typically controlled by an electric fluid pump, which raises the pressure of the brew water up to the desired level and pumps the water through the ground coffee. Due to the complexity of these systems, espresso coffee machines tend to be large and expensive.

In conventional espresso coffee machines, ground roasted coffee beans are typically introduced to and removed from the machine using removable attachments known as 'porta-filters'. A porta-filter typically comprises a perforated filter basket and a handle. Ground coffee beans are placed in the basket and tamped down. The porta-filter is then attached to an espresso machine by a bayonet coupling, and brew water is delivered downwardly through the ground coffee.

Other types of coffee-maker have achieved popularity by producing coffee using lower-complexity systems suitable for use with stove tops, or cooker hobs. A well-known example of these stove-top coffee-makers is the Bialetti *Moka-Pot* (RTM). These machines typically use a saturated boiler to generate both brew temperature and brew pressure. This is done by heating brew water in the saturated boiler until the steam pressure in the boiler propels the brew water out of the boiler and through a chamber containing ground coffee beans. These machines are notable for their simplicity, often operating with a complete absence of electric power or control systems, and using only a single heat supply (the stove top) as the power source for the machine. However, due to the thermodynamic link between temperature and pressure, the saturated boiler in these machines is not capable of producing both the optimum brew temperature and brew pressure for espresso coffee.

In order to generate the ideal espresso brew pressure of 9 bar in a saturated boiler, the temperature of the brew water has to be raised to approximately 180C. This is well above the optimum brew temperature. Conversely, if a saturated steam boiler is run at an operating temperature of 100C, the brew pressure will be approximately 0 bar (gauge pressure). This is well below the optimum brew pressure. As a consequence, conventional stove-top coffee-makers are operated at sub-optimal brew conditions, with brew temperature exceeding 100C (typically 100 - 120C) and a low brew pressure of typically 0 bar to 1 bar gauge pressure.

Another drawback of typical stove-top coffee-makers is that, in these coffee-makers, ground coffee beans are typically held in a chamber with a perforated base, above a chamber in which the brew water is heated by the stove top. When the brew water boils it is delivered upwardly through the perforated base and through the ground coffee. In some varieties of stove-top coffee maker ground coffee is held uncompressed in the chamber, while in others the ground coffee may be tamped downwards towards the perforated base of the chamber. Both of these options hold significant drawbacks.

Uncompressed ground coffee provides very little flow-resistance to high-pressure brew water, so brew water flows through the ground coffee very quickly and in an uneven manner. Fast flowing brew water spends too little time in contact with the ground coffee, leading to the production of an under-extracted coffee beverage. In other words, lack of resistance to brew-water flow means that large brew-water pressures disadvantageously cannot be sustained.

Ground coffee tamped down against the perforated base of the chamber, and thus against the direction of flow of the brew water, is susceptible to the problem of 'cracking'. Cracking occurs where high-pressure brew water flowing into the chamber against the direction of tamping creates one or more cracks in the tamped ground coffee. These cracks offer low-resistance pathways through the coffee, so brew water tends to flow through the cracks rather than percolating evenly through the tamped ground coffee. This leads to over-extraction from ground coffee in cracked regions, but overall under-extraction in the beverage produced.

Coffee-making apparatuses known in the prior art are disclosed in FR2186209A1, FR2347014A1, EP0808597A2, US2003/066430A1 and WO2013/032104A1.

The present invention seeks to overcome these deficiencies in the prior art, and to provide an apparatus and method for brewing coffee at a precise, predetermined brew temperature and brew pressure.

### Summary of the invention

The invention provides a coffee-making apparatus, a coffee-filter apparatus, and a method of making coffee as defined in the appended independent claims, to which reference should now be made. Preferred or advantageous features of the invention are set out in dependent sub-claims.

In a first aspect of the invention, a coffee-making apparatus comprises a brew-water chamber and a boiling-water cooling chamber (or cooler). A conduit or passage leads from the brew-water chamber to a coffee chamber which contains, in use, a source of coffee such as ground coffee beans. A valve prevents flow through the conduit until a threshold pressure is reached, at which the pressure in the brew-water chamber is greater than or equal to 4 bar. The brew-water chamber and the boiling-water cooling chamber are defined within a common container and separated by a dividing wall that is insertable into the common container. In use, the brew-water chamber contains brew water for making coffee, and the boiling-water cooling chamber contains water which is heated to its boiling point for use in cooling the brew water to a desired temperature. The valve is openable at the threshold pressure, at which the pressure in the brew-water chamber is greater than or equal to 4 bar, and the temperature of the brew water is greater than the temperature of the boiling water, to allow the brew water to pass from the brew-water chamber, through a heat exchange portion of the conduit in thermal contact with the boiling-water cooling chamber, to the coffee chamber. The brew water passing through the conduit is advantageously cooled by the boiling-water cooling chamber, preferably so that its temperature approaches or equilibrates with the temperature of the boiling water in the boiling-water cooling chamber. The brew-water then flows into contact with, for example, ground coffee contained in a coffee chamber in order to brew the desired coffee.

In use, the brew water is heated in the brew-water chamber, which may act as a saturated boiler. The brew water is retained in the brew-water chamber, or is prevented from flowing through the conduit, by the valve (or pressure valve), and is heated to a temperature higher than the temperature of the water in the boiling-water cooling chamber. When the steam pressure in the brew-water chamber reaches or overcomes the threshold pressure of the pressure valve, the pressure valve opens. This allows brew water to pass through the conduit driven by the steam pressure. The brew water passing through the conduit is cooled by heat transfer to the boiling water in the boiling-water cooling chamber so that the temperature of the brew water approaches and preferably equilibrates with the temperature of the boiling water. The brew water temperature may thus be reduced to a predetermined temperature whilst advantageously maintaining a pressure driven by, and preferably approximately equal to, the steam pressure within the brew-water chamber. After cooling, the brew water thus enters the coffee chamber at a predetermined temperature and pressure, where it contacts the source of coffee (typically ground coffee, for example loose or contained in a capsule or pod) and undergoes brewing.

In a preferred embodiment, the predetermined pressure may be, for example, between 8 bar and 10 bar, requiring a temperature in the brew-water chamber of more than about 170 °C, and the boiling water in the boiling-water cooling chamber may be, for example, at about 100°C (if the cooling chamber is open to the atmosphere at or near sea level) so that the predetermined temperature of the brew water delivered to the coffee may then be about 100°C.

The combination of the pressure valve and the boiling-water cooling chamber in the apparatus thus effectively allows the brew pressure and the brew temperature of the brew water to be accurately controlled separately, or independently from each other. The temperature and pressure of the brew water as delivered to the coffee are effectively decoupled by this arrangement, allowing the apparatus, in use, to achieve ideal espresso brewing conditions.

Preferably, the brew water should be at an ideal espresso brew temperature of 90 °C -96 °C when it enters the coffee chamber. In order to achieve this temperature, the coffee-making apparatus may comprise a further cooling portion such that, in use, the temperature of the brew water is further reduced from its temperature after cooling by, or equilibration with, the boiling water in the cooling chamber and before the brew water enters the coffee chamber.

The further cooling portion may take any form capable of suitably reducing the brew-water temperature, but preferably it may comprise an air-cooling portion, or air-cooler. The air-cooling portion may be adapted to provide heat exchange with air surrounding the device. For example, the air-cooling portion, or air-cooler, may comprise cooling fins, or a heat exchanger, and may comprise an air-cooling chamber in thermal contact with the air-cooling fins. The dimensions and properties of the air-cooling portion may be chosen such that, in use, brew water at the threshold pressure and equilibrated temperature (i.e. the temperature of the boiling water) is further cooled by less than 10 °C, or 8 °C, or 6 °C, and more than 4 °C, or 2 °C, on passing through the air-cooling portion. Advantageously, therefore, the further cooling portion may reduce the brew water temperature by less (by fewer degrees °C) than the brew water temperature has been reduced by the boiling-water cooling chamber or boiling-water cooler. For example the boiling-water cooler may reduce the temperature by about 50 °C to 80 °C and the further cooling portion by 10 °C or less. This may achieve an accurately predetermined brew-water temperature for brewing coffee because the boiling-water cooler reduces the brew water temperature towards, or into equilibrium with, a fixed, predetermined, temperature, namely the temperature of the boiling water, before the much smaller reduction in temperature in the further cooling portion.

Preferably the boiling-water cooling chamber is heatable by conduction of heat from the brew-water chamber in order, in use, to raise the water in the boiling-water cooling chamber to its boiling point. Before use, the boiling-water cooling chamber and the brew-water chamber are preferably supplied, or filled, with cold, unheated water. The brew-water chamber and the boiling-water cooling chamber are preferably in thermal contact with each other. Preferably, the heat transfer, or the rate of heat transfer or flow, between these chambers is high enough, in use, to raise the boiling water to its boiling point and maintain it at this temperature, but low enough that the brew-water chamber retains enough heat to generate the threshold steam pressure.

Preferably, the apparatus is adapted for use with an external heat source, or an external energy source. Particularly preferably the apparatus may be operable to make coffee with a single heat source. The coffee-making apparatus may be a stove-top apparatus.

Alternatively, the apparatus may comprise an internal heat source, for example an electric heating coil, optionally supplying heat to the brew-water chamber. The apparatus may comprise a cooling-chamber heater for, in use, heating the boiling water in the boiling-water cooling chamber. The brew-water chamber and the boiling-water cooling chamber may have, or be heated by, the same internal or external heat source or by separate internal or external heat sources. The apparatus may be adapted to operate using induction heating or with a microwave oven.

If the apparatus is intended for stove-top use, or for use with a single external heat source, then the heat may conveniently be input or applied to the brew-water chamber. The rate of heat flow or transfer from the brew-water chamber to the boiling-water cooling chamber may then be designed so that the water in the boiling-water cooling chamber reaches boiling point before, preferably shortly before (such as 20s to 5s before), the brew water leaves the brew-water chamber.

The apparatus may be arranged such that, in use, brew water from the conduit flows through a coffee chamber. The pressure valve is preferably upstream of the coffee chamber, so as to prevent brew water from coming into contact with the source of coffee until it is pressurised (in the brew-water chamber) to the threshold pressure of the pressure valve. The pressure valve may be upstream of the boiling-water cooling chamber, so that brew water is not cooled by the boiling-water cooling chamber until it is pressurised to the threshold pressure. If the conduit passes through the boiling-water cooling chamber then the pressure valve may be at a point in the conduit within the boiling-water cooling chamber. Alternatively, the pressure valve may be downstream of the boiling-water cooling chamber and/or the coffee chamber.

The valve may be any suitable pressure valve or pressure-regulating valve. The pressure valve opens, in use, when the pressure in the brew-water chamber is greater than or equal to a predetermined threshold pressure of 4 bar, for example 5 bar, or 7 bar, or 8 bar, or 9 bar, or 10 bar, or 11 bar, or 12 bar, or 13 bar, or 14 bar, or 15 bar. The predetermined threshold pressure may also be less than, for example, 9 bar, or 10 bar, or 11 bar, or 12 bar, or 13 bar, or 14 bar, or 15 bar. The pressure valve may be adjustable, or controllable, to vary the threshold pressure at which it opens. Alternatively, the threshold pressure may be set to a predetermined level during the manufacturing process. The threshold pressure of the pressure valve is preferably chosen so that during brewing, the pressure of the brew water in the coffee chamber is in a range suitable for espresso brewing, for example between 8 bar and 10 bar. Particularly preferably, the pressure of the brew water in the coffee chamber is 9 bar during brewing. The threshold pressure of the pressure valve may be chosen accordingly to compensate or allow for any pressure drop or pressure increase along the flow path of the brew water, such that that the brew water is at a predetermined brew pressure in the coffee chamber.

The brew-water chamber may function, in use, as a saturated boiler. In order to generate a brew-chamber pressure greater than 0 bar (gauge pressure), the brew water must therefore be heated to a temperature greater than 100 °C. As described above, an espresso brewing pressure of 8 bar to 10 bar may be desirable. The brew water leaving the brew-water chamber, when the pressure valve opens, is therefore preferably at a temperature equal to or greater 150 °C, or 170 °C, or 180 °C. Preferably the brew water leaving the brew-water chamber is at a temperature equal to or less than 190 °C, or 200 °C, or 210 °C.

The brew-water chamber may comprise a safety valve, openable at a predetermined pressure to allow the contents of the brew-water chamber to be vented out of the brew-water chamber. The safety valve may be openable at a pressure of 10 bar or 11 bar or 12 bar or 14 bar, or any other pressure greater than the threshold pressure. The safety valve may be positioned in a wall of the brew-water chamber. The safety valve may vent to the surroundings of the brew-water chamber, such as to the atmosphere, but in a preferred embodiment the safety valve may be positioned between the brew-water chamber and the boiling-water cooling chamber, for example in a shared wall so that the valve allows excess steam and/or water to be vented from the brew-water chamber into the boiling-water cooling chamber. This arrangement may advantageously ensure that water and/or steam ejected from the brew-water chamber at a high temperature and pressure are cooled by the boiling-water cooling chamber before being vented to the atmosphere. The energy of the water/steam may thus be advantageously dissipated into the boiling-water cooling bath, so that steam subsequently vented to the atmosphere is at a temperature approximately equal to the lower temperature of the boiling-water cooling chamber.

The boiling-water cooling chamber advantageously acts as a cooling bath with a precise, fixed temperature, namely the boiling point of water at a given, or predetermined, pressure. In use, brew water entering the conduit is at a temperature greater than the temperature of the boiling water. As it passes through the conduit, the brew water loses heat by thermal conduction into the boiling-water cooling bath. The heat lost by the brew water is preferably dissipated by the conversion of the boiling water into steam, while the temperature of the water bath remains at the same boiling temperature. The pathway of the conduit is preferably chosen such that the temperature of the brew water passing through the conduit is cooled until its temperature approaches or equilibrates with the temperature of the boiling water. Parameters such as the material, diameter, wall thickness and surface area of the conduit may be chosen to provide advantageous heat exchange characteristics so as to enable a desired flow of heat from the brew water to the boiling water.

As the heat exchange or transfer is a function of the temperature difference between the brew water and the boiling-water cooling chamber, the rate of heat transfer from the brew water to the cooling chamber will decrease as the brew water cools towards the temperature of the boiling water, as the brew water progresses through the conduit. The skilled person will therefore understand that exact thermal equilibrium between brew water and boiling water may not be achieved in operation. The temperature of the brew water may be taken to have equilibrated with the boiling-water cooling bath when the temperatures of the two bodies of water are within a few degrees of one another, for example within 5 °C, or 3 °C, or 2 °C of one another. Preferably, the heat exchange characteristics of the apparatus are such that, in use, brew water equilibrates to within 1 °C of the temperature of the boiling-water cooling chamber.

The rate at which the brew water passes through the boiling-water cooling chamber affects the amount of time which the brew water spends in thermal contact with the cooling chamber, and may therefore affect the equilibrated temperature of the brew-water. Factors such as the packing density of the coffee in the coffee chamber may affect the flow rate of the brew water through the conduit. For example, very coarsely ground coffee, or coffee packed loosely in the coffee chamber, may offer a lower hydraulic flow resistance than medium or finely ground coffee, compressed tightly in the coffee chamber. When coffee is very coarsely ground, or not sufficiently compressed, brew water may flow through the conduit and the coffee chamber at a higher flow rate than would occur for well-compressed coffee. This may result in the brew water having less time to cool down in the conduit, and consequently entering the further cooling portion (if present) or the coffee chamber at an elevated temperature. To address this potential problem, the conduit may be made so that, under normal conditions, brew water flowing through the conduit equilibrates with the temperature of the boiling-water cooling chamber approximately one or two or three or four or five seconds before it leaves thermal contact with the cooling chamber.

Due to the constant temperature of the boiling-water cooling bath, brew water can never be over-cooled by spending too long in thermal contact with the cooling chamber. For example, in the event of poorly-packed coffee and higher-than-usual flow rate, an excess length of conduit in thermal contact with the cooling chamber may improve the likelihood that the brew water will achieve its intended equilibrated temperature before exiting the conduit.

The boiling-water cooling chamber may be unsealed, or open to the atmosphere, such that in use at an ambient pressure of 0 bar gauge pressure (approximately 1 bar absolute pressure), the temperature of the boiling water is maintained at approximately 100 °C, the standard boiling point of water. However, as the boiling temperature of water varies with ambient pressure, and therefore altitude, the boiling-water cooling chamber may preferably be closed by a cooling-chamber pressure valve. This cooling-chamber pressure valve may preferably be openable at a predetermined pressure such that, in use, the boiling-water cooling chamber is maintained at a predetermined vapour pressure, and therefore a fixed boiling temperature, regardless of ambient conditions. For example, the boiling-water cooling-chamber pressure valve may open at a pressure equal to or greater than 0 bar or 0.2 bar, preferably below 0.4 bar or 0.8 bar (gauge pressure). The valve may open at a lower pressure, below 0 bar gauge pressure, such as -0.3, -0.2 or -0.1 bar gauge pressure (0.7, 0.8 or 0.9 bar absolute pressure). Such a valve pressure would not affect the cooling-chamber water's boiling point if ambient atmospheric pressure is higher than the valve-opening pressure, for example at sea level. But the valve-opening pressure would ensure that the boiling point of the cooling-chamber water does not disadvantageously reduce excessively at lower ambient atmospheric pressure, for example at higher altitude. For example if the valve opens at -0.3 bar (gauge pressure) and the ambient atmospheric pressure is equal to or lower than that valve-opening pressure, then the cooling-chamber water may boil at about 90 °C, which may be a suitable temperature for cooling the brew water for coffee making.

Preferably, the brew temperature produced by an apparatus embodying the present invention is in the ideal espresso brew temperature range of 90 °C to 96 °C. Preferably, the apparatus may therefore cool the brew water, in use, by a few degrees centigrade after having equilibrated in temperature with the boiling-water cooling bath. This temperature drop may be achieved by a further cooling portion in which heat is conducted to a body of the apparatus, or to an air-cooling portion. Particularly preferably, the apparatus provides a brew temperature, in use, of 93 °C to 95 °C.

A coffee-making apparatus embodying the present invention may be realised in a variety of ways. In a preferred embodiment, the boiling water-cooling chamber is positioned between the brew-water chamber and the coffee chamber. The coffee chamber may be above the boiling-water chamber, and/or the boiling-water cooling chamber may be above the brew-water chamber.

The brew-water chamber may be adapted to receive heat from a heat source. The brew-water chamber may be adapted to interface with a heat source or an energy source, for example a stove or hob such as a gas hob, or an induction heater, or an oven or a microwave oven. In a preferred embodiment, the brew-water chamber has a flat base so that the apparatus may stand on a heat source such as a stove top.

Preferably, chambers of the apparatus may be separable from one another. The brew-water chamber and the boiling-water cooling chamber may be separable in order to receive water.

The boiling-water cooling chamber may receive boiling water, or not-boiling water which is raised to its boiling point during operation of the apparatus. The water in the cooling chamber may be boiling before the brew-water pressure valve opens, or it may be raised to its boiling point by heat transferred from the brew water in the conduit, as long as the cooling-chamber water reaches its boiling point before the brew water flows out of thermal contact with it.

Preferably, however, heat transfer to the boiling-water cooling chamber during use of the coffee-making apparatus is sufficiently rapid such that the water in the boiling-water cooling chamber is at its boiling point before the brew-water chamber reaches the threshold pressure and flows out of the brew-water chamber.

Preferably, both the brew-water chamber and the boiling-water cooling chamber may be filled with water in a single filling operation. Alternatively the brew-water chamber and the boiling-water cooling chamber may be filled with water separately. Preferably the optimum water-fill-level(s) of the apparatus is/are indicated on the apparatus, for example by one or more raised lines on the wall(s) of the chamber(s). Particularly preferably, as part of a single filling operation the fill-water may be automatically partitioned into brew water and boiling-water cooling chamber water on assembly of the apparatus before use.

The coffee chamber is preferably openable, or separable, in order to receive a source of coffee prior to use, and to remove the source of coffee following use. The apparatus may comprise a perforated diffuser plate such that, in use, brew water from the conduit passes through the perforated diffuser plate before entering the coffee chamber, or before contacting the source of coffee. This diffuser plate may advantageously prevent the source of coffee from entering the conduit and creating a blockage. The diffuser plate may also act to slow and spread out the brew water on entry into the coffee chamber, and to prevent the pressurised brew water from entering the coffee chamber and contacting the source of coffee only in one concentrated spot or area.

The source of coffee may be ground roasted coffee beans (ground coffee). Alternatively, the source of coffee may be a single-use coffee 'pod' or capsule, such as those used widely in domestic coffee machines.

The coffee chamber may be adapted to receive ground coffee beans directly. The coffee chamber may be adapted to receive a single-use coffee capsule. Preferably the coffee chamber may comprise a perforated coffee basket. This coffee basket may advantageously be removable from the apparatus, such that it may be removed in order to receive ground coffee beans and/or clean the coffee basket after use. Preferably, ground coffee in the coffee chamber should be compressed before brewing, for example by tamping. Brew water entering the coffee chamber, in use, is then forced to diffuse and percolate evenly through the source of coffee. This ensures even extraction throughout the source of coffee, and prevents the pressurised brew water from disturbing the coffee and thus creating a low resistance path through the coffee chamber. In use, the compression (tamping) of the coffee may advantageously cause a pressure drop across the coffee chamber, allowing the brew water to maintain its ideal brewing pressure and flow rate (about 2g of brew water per second) throughout the brewing process.

The coffee chamber has an outlet, such that, in use, brew water flows out of the outlet after being brewed to produce coffee. The outlet may advantageously comprise or lead to a coffee reservoir, such that, in use, brewed espresso coffee flowing out of the outlet collects in the coffee reservoir. The coffee-maker may comprise a removable lid or cover which covers the coffee reservoir.

The apparatus, or suitable portions of the apparatus intended to conduct heat, may be made from a thermally conductive material, preferably a metal. An appropriate metal may be an aluminium alloy or stainless steel or brass or bronze. The apparatus may be formed from more than one material.

In a second aspect, the invention may advantageously provide a coffee-making apparatus which, in use, comprises a brew-water chamber containing brew water, a boiling-water cooling chamber containing boiling water, and a coffee chamber containing a source of coffee. The coffee-making apparatus comprises a conduit leading from the brew-water chamber to the coffee chamber, and a pressure valve, openable at a threshold pressure of the brew water in the brew-water chamber, to allow the brew water to pass through the conduit, wherein, in use, the brew water passing through the conduit is cooled by the boiling-water cooling chamber so that its temperature approaches or equilibrates with the temperature of the boiling water in the boiling-water cooling chamber.

A further cooling portion may be provided to reduce the temperature of the brew water after cooling by the boiling-water cooling chamber.

In a third aspect, the invention provides a method of making coffee using a coffee making apparatus according to the first aspect, comprising the steps of: placing water in the common container (134); inserting the dividing wall into the common container (134) to define the brew-water chamber (102) and the boiling-water cooling chamber (108); heating brew water contained in the brew-water chamber until it reaches a threshold pressure greater than or equal to 4 bar and a temperature greater than the temperature of the boiling water in the boiling-water cooling chamber, at which it flows out of the brew-water chamber; cooling the brew water by heat transfer to a body of boiling water, preferably so that its temperature approaches or equilibrates with that of the body of boiling water; and bringing the cooled brew water into contact with a source of coffee.

The method may comprise the step of further cooling the brew water after it has been cooled by or brought into thermal equilibrium with the body of boiling water and before the brew water is brought into contact with the source of coffee. This further cooling step may be achieved by air-cooling, or by heat flow to a body of a material at a temperature lower than the temperature of the boiling water.

The method may also comprise the step of heating the body of cooling water to its boiling point by conduction of heat from the brew-water chamber. The boiling water may be contained in a boiling-water cooling chamber. The boiling water is preferably in thermal contact with the brew-water chamber, such that heating the brew water in the brew-water chamber indirectly heats the body of boiling water to its boiling point.

The brew water may be heated by an external heat source or by a brew-water heater. The body of boiling water may also be heated by an external heat source, which may be the same external heat source, or by a cooling-chamber heater. Preferably, however, all of the heating is provided by a single heat source. Heating may be provided by a stove top.

The threshold pressure at which the brew water can flow out of the brew-water chamber is preferably greater than or equal to 5 bar, or 6 bar, or 7 bar, or 8 bar, or 9 bar, or 10 bar and/or is preferably less than 11 bar, or 12 bar, or 13 bar, or 14 bar, or 15 bar. Particularly preferably, the brew water can flow out of the brew-water chamber at a threshold pressure of 9 bar. The threshold pressure may be determined by a pressure valve, openable at the threshold pressure to allow the brew water to flow out of the brew-water chamber. The brew water flowing out of the brew-water chamber may be at a temperature equal to or greater than 150 °C, or 170 °C, or 180 °C. Preferably the brew water flowing out of the brew-water chamber is at a temperature of less than 190 °C or 200 °C or 210 °C. The body of boiling water (in the boiling-water cooling chamber) may be heated to and maintained at a temperature equal to or greater than 95 °C (at altitude, or on a low-pressure day), or 100 °C, or 105 °C, and preferably less than 110 °C, or 115 °C (optionally by controlling or limiting the pressure in the boiling-water cooling chamber, for example by use of a cooling-chamber pressure valve). Brew water leaving the brew-water chamber is thus at a greater temperature than that of the body of boiling water, so if the two bodies are in thermal contact heat will flow from the brew water to the body of boiling water. The brew water may therefore be cooled by bringing it into thermal equilibrium with the body of boiling water.

The source of coffee may be, for example, ground coffee beans or a single use coffee 'pod' or capsule. The source of coffee may be contained in a coffee chamber. The brew-water chamber may be connected to the coffee chamber by a conduit, such that brew water flowing out of the brew-water chamber flows through the conduit to the coffee chamber. The conduit may be in thermal contact with the body of boiling water.

The method may comprise a first step of filling the brew-water chamber with water. The method may comprise the further steps of providing a boiling-water cooling chamber to contain the body of boiling water, and optionally the step of heating the body of boiling water to, and maintaining it at, its boiling point. Further steps may include providing a coffee chamber to contain the source of coffee, and placing the source of coffee in the coffee chamber before the brew water is brought into contact with the source of coffee. Preferably, after the brew water has been brought into contact with the source of coffee, the brew water may be collected in a coffee reservoir.

A method of making coffee with the coffee-making apparatus according to a preferred embodiment of the present invention may comprise the steps of: filling the brew-water chamber with brew water; filling the boiling-water cooling chamber with water; filling the coffee chamber with a source of coffee; and heating the brew-water chamber.

Attempts have been made in the prior art to overcome the pressure-temperature limitations of conventional stove-top coffee-makers, such as the Bialetti *Moka-Pot* (RTM) referred to above.

In one such attempt, patent application FR 2347014 describes a coffee-maker which comprises a boiler and a cooling water bath positioned above the boiler. The cooling water bath and the boiler are separated by a narrow neck, designed to minimise heat transfer from the boiler to the cooling water bath. Below the neck, one end of a tube protrudes into the boiler. The tube passes vertically up through the neck and into the cooling water bath, where it is coiled to form a heat-exchange coil. The tube then leads into a coffee chamber. A valve, openable at a set pressure, closes the tube between the cooling water bath and the coffee chamber. In use, brew water in the boiler is heated. During heating of the brew water, the narrow neck minimises heating of the cooling water bath. At a brew-water temperature of approximately 180C the boiler pressure is sufficient to open the valve and to allow the brew water to be propelled out of the boiler through the tube. On passing through the cooling water bath, the brew water loses heat by conduction into the water bath before passing into the coffee chamber, which, in use, contains ground coffee beans.

The present inventors have found that the device of FR 2347014 does not brew coffee at a repeatable, well-controlled temperature.

In FR 2347014 the temperature of the water bath is not fixed. Therefore, because the cooling effect of the cooling water bath varies depending on the temperature of the cooling water, the temperature of the brew water delivered to the coffee is variable. For example, if the cooling water bath has been filled with cold water immediately prior to brewing, the brew water will be cooled more, and therefore the brew temperature will be lower, than if the coffee maker has recently been used, and the water bath has been warmed by heat transfer from the previous use. The volume of water in the cooling water bath will also affect its cooling characteristics, as a smaller volume of water will heat up to a greater extent during operation, and will therefore cool the brew water less effectively.

Even within a single brewing operation, the brew temperature produced by the coffee-maker of FR 2347014 will vary, as the cooling water bath will heat up due to heat transfer from the brew water, and therefore cool less effectively as brew water is passed through the tube. Brew water passing through the tube early in the brewing process will therefore arrive in the coffee chamber at a lower temperature than brew water passing through the tube later during brewing.

FR 2347014 teaches that it is important to limit the transfer of heat from the boiler into the cooling water bath, in order to minimise the temperature of the cooling water and so maximise heat transfer from the brew water to the cooling water. It is inevitable, however, that some heat will be conducted to the cooling water during heating of the brew water. But the quantity of heat conducted to the cooling water will vary depending on factors such as the characteristics of the heat source, and how long it takes to heat the brew water, leading to further inconsistency in the temperature of the cooling water bath.

In addition to these factors, the extent of brew-water cooling will also vary as the flow rate of the brew water through the tube in the cooling water bath varies. Such variations will occur because the flow rate of the brew water will change with variations in the hydraulic flow resistance of the coffee in the coffee chamber. The hydraulic flow resistance depends on the grain size of the ground coffee and the quantity of coffee used, and the grain size and quantity of coffee will be determined by user preference.

As the temperature of the cooling bath in this device may vary significantly depending on a number of external, uncontrolled factors, and given that the rate of flow of brew water inevitably varies (for example with the grain size of the ground coffee), the brew temperature of the water delivered to the coffee can vary significantly between uses. The coffee-maker of FR 2347014 therefore cannot be relied upon to produce brew water at a consistent, repeatable brew temperature.

The coffee-making apparatus and method according to the present invention in its various aspects provide several advantages over the coffee-makers of the prior art. Particularly, the present invention may repeatably deliver brew water to a source of coffee at an ideal and consistent brew temperature and brew pressure for the brewing of espresso coffee. Unlike the coffee-makers of the prior art, the present invention makes use of the boiling point of water as a fixed point for a cooling water bath, providing repeatable cooling characteristics regardless of initial conditions and independently of brew-water flow rate. As the brew conditions of the present invention are preferably passively controlled by the threshold pressure(s) of the pressure valve(s), the present invention may advantageously achieve decoupling of, or independent control of, the temperature and the pressure of the brew water without the need for electrical control systems.

In a fourth aspect the invention may comprise a method of making coffee, the method comprising the following steps. A source of coffee is introduced into a container with a perforated outlet-wall, and compressed, or tamped, against the perforated outlet-wall. A perforated filter plate is then positioned in the container, abutting and/or retaining the source of coffee in position in the container. The container is then tilted, or inverted, for example so that the source of coffee is above the perforated filter plate. Water, or brew water, is introduced through a water inlet, such that the water flows through the perforated filter plate, passes through the source of coffee and then flows through the perforated outlet-wall of the container before being delivered out of a coffee outlet as a brewed coffee beverage.

The container, together with the tamped source of coffee and the perforated filter plate, may be tilted to any orientation for the introduction of the brew water. The filter plate may advantageously retain, or brace, the tamped source of coffee in place for optimum brewing regardless of the orientation of the container. But in a preferred embodiment the container is tilted so that it is inverted, and the brew water flows upwardly through the source of coffee in the container.

The source of coffee may be ground roasted coffee beans, otherwise known as ground coffee or coffee grounds, for example loose or contained in a capsule or pod. The degree to which the roasted ground coffee beans are ground may vary, and the quantity of roasted ground beans introduced to the container may vary, according to a user's preference.

Preferably, the source of coffee may be compressed or compacted by pressing, or tamping, the source of coffee against the perforated outlet-wall of the container. During this step the container is preferably oriented so that the source of coffee is above the perforated outlet-wall, ideally with the outlet-wall horizontal. The compressing, or tamping, step may be carried out with the use of a coffee 'tamper': this is a commonly available coffee-making implement through which pressure, or force, can be applied to a source of coffee. During tamping a user may apply a force to the source of coffee of at least 25 N, or 50 N, or 100 N. An end of the tamper applied to the source of coffee is typically flat, and is shaped to fit into the container, covering and contacting most or substantially all of the surface of the source of coffee in the container. The area of the flat end of the tamper is typically between 0.002 m² and 0.003 m².

The step of compressing, or tamping, the source of coffee may advantageously reduce any void spaces in the source of coffee, for example between coffee grounds. This step may also even out the distribution of the source of coffee in the container, preferably such that the source of coffee is uniformly distributed over the outlet-wall of the container. Preferably the compressed source of coffee should be uniformly distributed with respect to both the water inlet and the coffee outlet, such that all water introduced through the water inlet experiences the same path-length in the source of coffee before passing out of the coffee outlet. The even distribution of the source of coffee may advantageously lead to even extraction of flavour throughout the source of coffee.

Compressing the source of coffee may advantageously increase the hydraulic flow resistance of the source of coffee. The compressed source of coffee may therefore offer an advantageously greater degree of resistance to the flow of brew water through the source of coffee than would be offered by the same source of coffee in an uncompressed state.

When water, or brew water, is introduced to the source of coffee, the flow rate of the water may be reduced by the hydraulic flow resistance of the source of coffee. The water may therefore take longer to flow, or percolate, through a compressed source of coffee than it would take to flow through an uncompressed source of coffee. This increases the length of time which the water spends in contact with the source of coffee, thus increasing the amount of flavour that is extracted from the source of coffee by the water. In other words, a greater hydraulic flow resistance caused by compressing the source of coffee may advantageously permit a higher brew-water pressure to be sustained at the inlet to the source of coffee.

The perforated filter plate may advantageously be positioned parallel to the perforated outlet-wall of the container. The perforated filter plate may advantageously be positioned in the container such that it abuts the source of coffee.

As the source of coffee is compressed or tamped against the perforated outlet-wall of the container, a first surface of the source of coffee is preferably in contact with the perforated outlet-wall of the container. The perforated filter plate may preferably be positioned to abut a second surface of the source of coffee opposite the first surface, such that the source of coffee is retained, or braced, between the perforated filter plate and the perforated outlet-wall of the container.

The perforated filter plate may be positioned in the container by push-fitting, for example being retained by friction between the filter basket and the filter plate. Alternatively, the perforated filter plate may be positioned in the container by screwing the perforated filter plate into a corresponding threaded portion of the container.

The perforated filter plate may advantageously be positionable at different positions in the container, for example at different spacings from the outlet-wall, so that the perforated filter plate may be positioned to abut the source of coffee regardless of the size of the source of coffee. For example, the position of the perforated filter plate in the container may be varied, or may be adjustable, depending on the quantity of ground coffee in the container.

The method further comprises the step of tilting the container, for example by inverting the container so that the source of coffee is above the perforated filter plate. As the perforated filter plate is positioned in the container prior to tilting/inversion, the perforated filter plate is also tilted or inverted with the container. The perforated filter plate preferably maintains its position in the container when the container is tilted or inverted. The perforated filter plate may advantageously support, or brace, the second surface of the compressed source of coffee on tilting or inversion, such that the source of coffee maintains its compressed state. Without the perforated filter plate positioned in the container, the source of coffee is likely to fall out of the container when the container is tilted or inverted. The perforated filter plate is preferably positioned to abut the source of coffee such that, when the container is tilted or inverted, the source of coffee is held in position and thus remains in its compressed state. The container may preferably be positioned such that the source of coffee is positioned directly above the perforated filter plate, and/or such that the perforated outlet wall of the container is positioned directly above the source of coffee.

The method comprises the final step of introducing water through a water inlet, such that the water flows (preferably upwardly) through the perforated filter plate, passes through the source of coffee and flows (preferably upwardly) through the perforated outlet-wall of the container and out of a coffee outlet. This upwards water-flow direction is advantageously compatible with the typical flow arrangement of stove-top coffee-makers, where water is forced upwardly out of a saturated boiler positioned at the base of the coffee maker, for heating by the stove top.

Preferably, water is introduced through the water inlet at an elevated temperature and pressure known as the brew temperature and brew pressure. Particularly preferably, water is introduced through the water inlet at the optimum temperature and pressure for brewing espresso coffee. It is widely accepted that for espresso coffee the ideal brew temperature range is between 90 °C and 96 °C, while the ideal brew pressure range is between 7 bar and 11 bar gauge pressure (8 bar and 12 bar absolute pressure), and preferably about 9 bar gauge pressure.

If the container is circular in section, with a diameter of 58 mm (which is the standard dimension of filter baskets, or porta-filters, commonly used in espresso machines), the surface area of ground coffee in the container is 0.00264 m². The maximum force applied to the surface of the ground coffee by water at 9 bar (900000 Pa) can thus be calculated as 900000 Pa x 0.00264 m² = 2376 N. The force applied to the ground coffee by the brew water may therefore be far in excess of the 100 N or so that a user may apply when tamping the source of coffee.

In the various aspects of the present invention the directions of water-flow and tamping are therefore advantageously the same, in order to solve the problem of cracking the source of coffee in coffee makers such as stove-top coffee makers. In embodiments of the invention, the force of the water-flow reinforces the compression caused by tamping the ground coffee, adding to the hydraulic flow resistance of the source of coffee and increasing the time during which the brew water is in contact with the source of coffee. This increases the degree of extraction of the source of coffee and allows the production of a true espresso beverage.

In a fifth aspect, the invention may advantageously provide a coffee-filter apparatus comprising a water inlet, a coffee outlet, a container having a perforated outlet-wall, and a perforated filter plate. The perforated filter plate is positionable in the container to abut and/or retain, in use, a source of coffee in the container. In use, the container may be oriented so that the water inlet is not vertically above the coffee outlet, as would be the case for a conventional porta-filter. Preferably, in use of the coffee-filter apparatus, the water inlet is below the coffee outlet and water entering through the water inlet flows through the perforated filter plate before contacting the source of coffee.

In a sixth aspect, the invention may advantageously provide a coffee-filter apparatus comprising a water inlet, a coffee outlet, a container having a perforated outlet-wall, and a perforated filter plate. The perforated filter plate may be positionable in the container to abut and/or retain, in use, a source of coffee in the container. In use, the water inlet may be below the coffee outlet and after contacting the source of coffee, water flows through the perforated outlet-wall of the container and exits through the coffee outlet.

The container having a perforated outlet-wall, may be termed a filter basket or coffee basket, and in a preferred embodiment is an open-ended receptacle having a side-wall, preferably a cylindrical side-wall, extending from a peripheral edge of the perforated outlet-wall. The open end of the container opposite the outlet-wall may be termed the inlet-end. The container may advantageously have a circular cross section.

Preferably, the perforated filter plate is positionable at different heights, or different spacings from the outlet-wall, in the container. The perforated filter plate may be positionable at certain set heights in the container, or alternatively the filter plate may be positionable at any height between the inlet-end and the outlet-wall. When the filter plate is positioned in the container, the periphery of the filter plate may preferably abut an inner surface of the side wall of the container. The filter plate may be substantially flat.

The surface area of the perforated filter plate may preferably be substantially the same as, or larger than, the surface area of a perforated portion of the outlet wall.

The perforated filter plate may preferably be positionable in the container by push-fitting or press-fitting. In order to facilitate push-fitting, the filter plate may preferably comprise a resilient member around its periphery, for example a rubber o-ring or other spring, such as a metal spring. With the filter plate positioned in the container, the resilient member may advantageously be urged against the side wall of the container. The filter plate may then advantageously be held in position as a result of frictional forces between the resilient member and the side wall of the container. The periphery of the perforated filter plate may form an interference fit with the side wall of the container.

Alternatively, the periphery of the perforated filter plate may comprise a screw thread configured to mate with a corresponding screw thread defined on an inner surface of the side wall of the container.

Preferably the perforated filter plate maintains its position in the container when or if the container is tilted or inverted in use. The frictional force between the perforated filter plate and the container, in use, may thus advantageously be sufficient to support the weight of the source of coffee and of the filter plate itself.

In a preferred embodiment in use, a source of coffee, for example roasted ground coffee, is placed in the container and compressed, or tamped, against the perforated outlet-wall of the container. The perforated filter plate is then positioned in the container to abut the source of coffee, such that the compacted source of coffee is retained between the outlet-wall of the container and the perforated filter plate. The container and filter plate are then turned to a different orientation, which in the preferred embodiment may be upside-down, or inverted, such that the source of coffee is above the filter plate. In use, water is then introduced through the water inlet below the source of coffee. The water flows upwards through the perforated filter plate and through the source of coffee and passes out of the perforated outlet-wall and out of the coffee outlet.

When the optimum flavour has been extracted from the source of coffee, the flow of water is stopped. The perforated filter plate is then removed so that the used source of coffee may be removed from the container. Preferably, the container and the perforated filter plate may be removable from the apparatus, or from the rest of the apparatus, to allow cleaning.

In use, the source of coffee is retained between the perforated filter plate and the tilted or inverted container throughout the brewing process. As ground coffee expands when wet, however, the perforated filter plate may advantageously be movable, for example by sliding within the container, to accommodate this expansion.

The perforated filter plate may advantageously comprise a rim around its periphery. When the filter plate is, in use, positioned in the container, the rim may preferably abut a side wall of the container. Preferably the rim may extend perpendicular to a plane of the filter plate, and parallel to the side wall of the container, such that, in use, the filter plate may only be inserted and removed from the container in a direction parallel to the side wall of the container. This may advantageously allow the filter plate to abut the compressed source of coffee evenly across its entire surface, and may substantially prevent the filter plate from tilting in the container.

The perforated filter plate preferably comprises a handle or a raised lip or rim to facilitate, in use, positioning of the filter plate in, and subsequently removing the filter plate from, the container.

The relative numbers and/or sizes of perforations in the filter plate and the outlet-wall of the container may advantageously be chosen to create, in use, a predetermined pressure difference across the source of coffee. The number, and/or size, of perforations in the perforated filter plate is preferably chosen such that the total area of the perforations (the perforation-area) of the filter plate is greater than or equal to the perforation-area of the outlet-wall of the container. The number and/or size and/or total area of perforations in these two filters determines, in use, the surface area through which water can flow, and thus affects, in use, the flow rate and amount of time that water spends in contact with the source of coffee. The amount of time that water spends in contact with the source of coffee, in use, may be termed the retention time of the water within the container.

In general terms, the sizes of the perforations in both the filter plate and the container outlet wall should be sufficiently small to retain the coffee, for example such that ground coffee will not pass through the perforations. But the total perforation area in each of the filter plate and the outlet wall should be sufficiently large such that an acceptably small pressure drop occurs as brew water flows through the perforations. For example the pressure drop at each set of perforations should be less than 10 % or 5 % or 1 % of the total pressure drop as the brew water flows through the perforations and the source of coffee.

The container and perforated filter plate may advantageously be formed from an impermeable material. Preferably, the container and the perforated filter plate may comprise a metal or metal alloy, for example stainless steel or aluminium. Metals and metal alloys are advantageous as they do not absorb oils given out during the coffee-brewing process, and they can accommodate a large number of perforations while maintaining a high strength.

The apparatus preferably comprises a handle to facilitate, in use, the tilting or inversion of the apparatus. The apparatus may comprise a screw thread, a bayonet fitting, or some other means of connecting the coffee-filter apparatus to a coffee-maker. Particularly preferably, the apparatus comprises a receptacle for receiving, in use, brewed coffee.

### Specific Embodiments and Best Mode of the Invention

Specific embodiments of the invention will now be described with reference to the accompanying drawings, in which;
Figure 1 is a schematic diagram illustrating various operational features of an apparatus which does not form part of the present invention;
Figure 2 is a vertical section of a coffee-making apparatus according to a first embodiment of the present invention;
Figure 3 is a perspective view of the cross section shown in Figure 2;
Figure 4 is a perspective view of the first embodiment;
Figure 5 is a vertical section of a second example of a coffee-making apparatus which does not form part of the present invention; and
Figure 6 is a perspective view of the second example;
Figure 7 is a perspective view of a container according to a third embodiment of the present invention;
Figure 8 is a transverse section of a perforated filter plate positioned in the container shown in Figure 7;
Figure 9 is a schematic sectional view of a coffee-making apparatus which does not form part of the present invention incorporating the container of Figures 7 and 8;
Figure 10 is a transverse section of a coffee-filter apparatus according to a fourth embodiment of the present invention;
Figure 11 is a perspective view of the section shown in Figure 10;
Figure 12 is a transverse section of a coffee-filter apparatus according to a fifth embodiment of the present invention;
Figure 13 is a perspective view of the section shown in Figure 12; and
Figures 14 to 17 are transverse sections of the fourth embodiment, showing different stages of a method of making coffee according to the present invention.

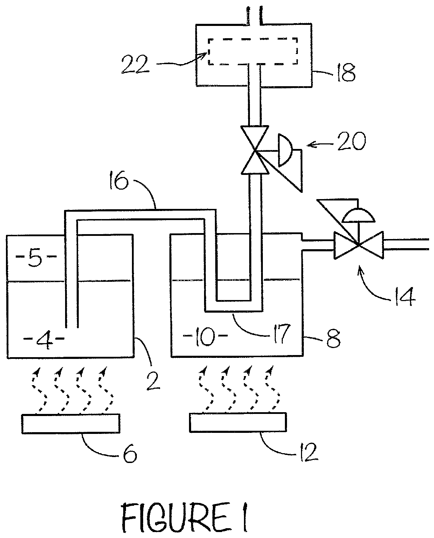

Figure 1 is a schematic diagram of a coffee-making apparatus for the production of espresso coffee, in which brewing occurs at a predetermined temperature and pressure, illustrating some principles of operation of a coffee-making apparatus.

In Figure 1, a brew-water chamber 2 is heatable by a first heat source 6, and a boiling-water cooling chamber 8 is heatable by a second heat source 12. The boiling-water cooling chamber comprises a cooling-chamber pressure valve 14 openable at a predetermined pressure. A conduit 16 leads from the brew-water chamber, through a heat-exchange portion 17 of the conduit in thermal contact with the boiling-water cooling chamber, to a coffee chamber 18. The conduit is closed by a pressure valve 20, openable in response to a threshold pressure. The pressure valve 20 has a closed state, in which the valve blocks the conduit 16, and an open state, in which fluid may pass through the conduit.

The first heat source 6 heats brew water 4 contained in the brew-water chamber 2. The conduit protrudes, in use, below the surface of the brew water 4 in the brew-water chamber 2. The brew-water chamber is closed, other than at an entrance to the conduit. When the brew water reaches a temperature equal to or greater than its boiling point steam 5 is generated in the brew-water chamber, and the brew-water chamber functions as a saturated steam boiler. At temperatures greater than 100 °C, the brew-water chamber thus contains saturated steam and water. As the brew water boils, the steam pressure in the brew-water chamber increases. As the boiling point of the brew water depends on the vapour pressure of the saturated steam in the brew-water chamber, the brew water is heated to a temperature greater than 100 °C as the vapour pressure increases above atmospheric pressure. When the steam pressure in the brew-water chamber is equal to the threshold pressure of the pressure valve 20, the brew water is at a first temperature greater than 100 °C and a first pressure greater than 0 bar. For example the first temperature may be about 180 °C and the first pressure about 9 bar.

A second heat source 12 heats boiling water 10 contained in the boiling-water cooling chamber 8. When the boiling water is at a temperature greater than or equal to its boiling point, the boiling-water cooling chamber acts as a saturated steam boiler. The steam pressure in the boiling-water cooling chamber is regulated by the cooling-chamber pressure valve 14. When the steam pressure rises above the predetermined pressure of the cooling-chamber pressure valve, the valve opens and excess steam is vented to the atmosphere. By regulating the steam pressure in the boiling-water cooling chamber in this way, the boiling water 10 is maintained at a second pressure and a second temperature. The second temperature and pressure are lower than the first temperature and pressure, and the second temperature may be greater than or equal to the boiling point of water at ambient pressure. For example, if the cooling-chamber pressure valve is openable at 0.03 bar, the boiling water is maintained at a temperature of approximately 101 °C. If the cooling-chamber pressure valve is openable at 0.20 bar, the boiling water is maintained at a temperature of approximately 105 °C. The cooling-chamber pressure valve may optionally be adjustable to open at different predetermined pressures, so as to regulate the steam pressure in the boiling-water cooling chamber, and thus the temperature of the boiling water 10.

When the pressure in the brew-water chamber reaches the threshold pressure, the pressure valve 20 opens, and the brew water 4 flows through the conduit 16. As the first temperature is greater than the second temperature and the conduit is in thermal contact with the boiling water 10 in the boiling water cooling chamber, brew water flowing through the conduit loses heat by conduction to the boiling water. The path of the conduit in the boiling-water cooling chamber is sufficiently long, and the conduit has sufficiently high thermal conductivity, that brew water flowing through the conduit equilibrates with the temperature of the boiling water. That is, the brew water is cooled until it is at approximately the same temperature as the boiling water in the boiling-water cooling chamber. The brew water is therefore cooled to the second temperature, while maintaining its first pressure. The pressure and temperature of the brew water are thus effectively decoupled.

Any heat absorbed by the boiling water goes into the production of steam, which may be vented from the boiling-water cooling chamber through the cooling-chamber pressure valve. The boiling water 10 therefore remains at the second temperature throughout operation of the coffee-maker.

Brew water at the first pressure and second temperature is then delivered by the conduit to the coffee chamber 18. In use, coffee chamber 18 contains a source of coffee 22, such that brew water entering the coffee chamber contacts the source of coffee and is brewed into an espresso coffee beverage. The temperature and pressure of the brew water in the coffee chamber may be termed the brew temperature and the brew pressure.

As the temperature of the brew water has equilibrated with that of the boiling water, the brew temperature is equal to or less than the second temperature. As there is a negligible pressure drop, in use, between the brew-water chamber and the coffee chamber, the first pressure is the brew pressure.

The brew pressure and brew temperature of the apparatus are therefore respectively controlled by the threshold pressure of the pressure valve 20 and the predetermined pressure of the cooling-chamber pressure valve 14. The threshold pressure of the pressure valve 20 determines the first temperature and first pressure of the brew water, which are thermodynamically inter-linked. The predetermined pressure of the cooling-chamber pressure valve 14 determines the second pressure and the second temperature of the boiling water in the boiling-water cooling chamber.

Many possible variations in this apparatus will be apparent to those skilled in the art, while maintaining the key principles of operation of the present invention. For example, the first heat source 6 and the second heat source 12 may take many different forms. The heat sources may be internal heat sources, for example electric heating coils associated with or inside the chambers. The first and second heat sources may be one single heat source arranged to heat both the brew-water chamber and the boiling-water cooling chamber. The cooling-chamber pressure valve 14 may be replaced by an open vent, such that the second pressure is ambient pressure. The position of the pressure valve 20 may be varied within the apparatus.

Optionally, the apparatus may comprise a further cooling portion, positioned between the boiling-water cooling chamber 8 and the coffee chamber 18. This may be an air-cooling portion. Its purpose is to reduce the brew water temperature from the temperature of the brew water after cooling by the boiling-water cooling chamber, if a slightly lower temperature is desired for brewing coffee.

The cooling portion may also comprise a thermal capacitor, where the brew water is brought into thermal contact with a volume of material at a lower temperature. The cooling portion may comprise both an air-cooling portion and a thermal-capacitor portion.

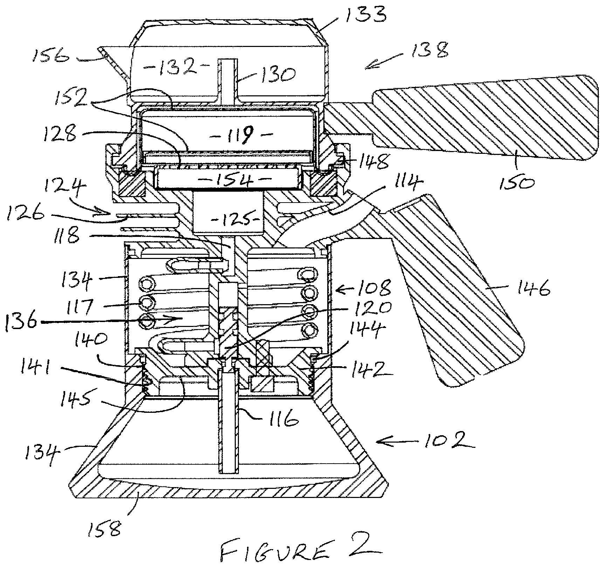

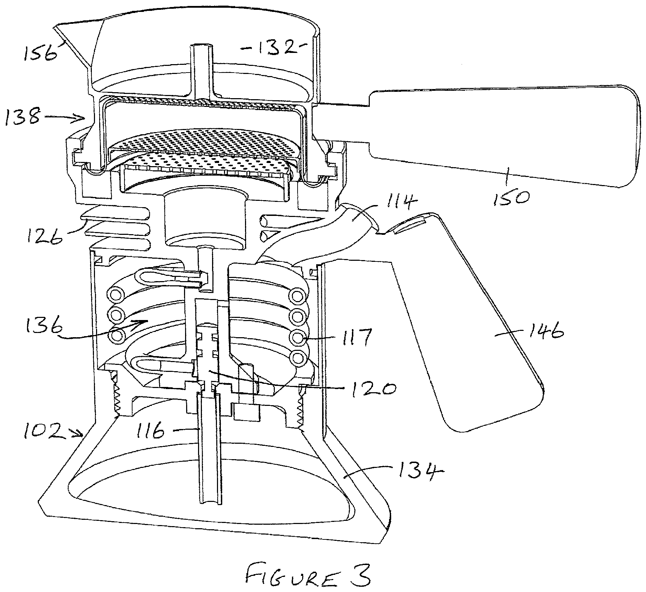

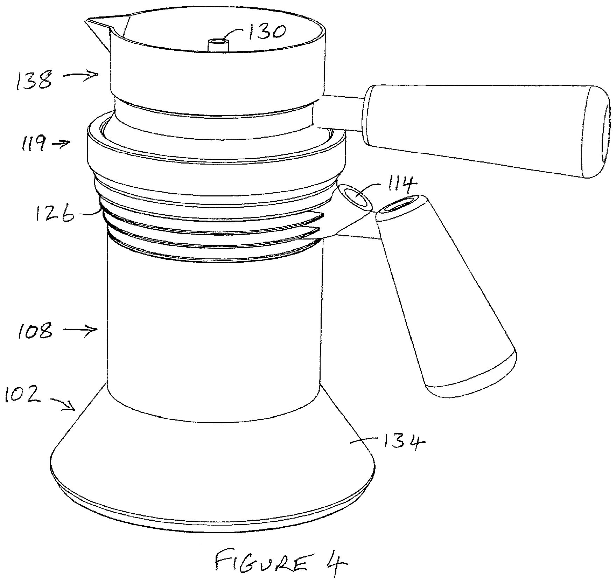

A first coffee-making apparatus embodying the invention is illustrated in Figures 2 to 4. The apparatus comprises, as its base, a cylindrical open-topped container 134. A lower portion of the container, terminating at an internal screw thread 140, forms a brew-water chamber 102. A circular brew-water chamber lid 142 comprises an external screw thread 141 and a rubber O-ring 144 around its outer edge. The lid has a concave, or domed, bottom surface 145. The external screw thread 141 is engagable with the internal screw thread 140 so that the O-ring forms a water-tight, pressure-tight, seal between the lid and a side wall of the container. When the lid 142 is screwed into the container 134, the brew-water chamber 102 is defined below the lid. The brew-water chamber comprises a safety valve (not shown) openable at a pressure of 11 bar, positioned in a side wall of the container or in the lid.

An upper portion of the container 134 above the lid forms a boiling-water cooling chamber 108. A vent 114 opens from an upper portion of the boiling-water cooling chamber to the atmosphere. The lid 142 is thermally conductive, such that the boiling-water cooling chamber is in thermal contact with the brew-water chamber.

A conduit 116 passes vertically through the lid, with an open end of the conduit protruding downwardly into the brew-water chamber. Above the lid, in the boiling-water cooling chamber, the conduit forms a helical coil 117. A pressure valve 120, openable at a threshold pressure of 9 bar, closes the conduit 116. The pressure valve 120 is positioned in the boiling-water cooling chamber, between the lid and the helical coil, such that, in use, it prevents the passage of fluid out of the brew-water chamber until the brew-water chamber achieves the threshold pressure.

An upper end 118 of the conduit 116 forms an air-cooled chamber 125 within an air-cooler 124, situated above the boiling-water cooling chamber and encircled by air-cooling fins 126. An upper end of the conduit widens further to form a widened portion 154. A perforated diffuser plate 128 separates this upper end of the conduit from a coffee chamber 119. An upper wall of the coffee chamber is in the form of an inverted funnel defining an outlet 130. The outlet 130 opens upwards into a coffee reservoir 132, which is situated above the coffee chamber and comprises a coffee-reservoir cover 133 and a spout 156.

To allow filling with water, the apparatus is separable into three components; the cylindrical open-topped container 134; an inner body element 136 which comprises the conduit 116, the pressure valve 120, the lid 142, the air-cooler 124, the helical coil 117 and a first handle 146; and an upper body element 138 which comprises the coffee chamber 119, the coffee reservoir 132, and a second handle 150. The inner body element is connectable to and separable from the container 134 by engaging and disengaging the screw threads 140, 141. The upper body element is connectable to and separable from the inner body element at a bayonet mount 148.

The container 134 is formed from a material with high thermal conductivity, preferably a metal such as aluminium or stainless steel or bronze. The boiler lid 142, the conduit 116, 117, 118 and the air-cooling portion 124 are also formed from a material with a high thermal conductivity, preferably a metal. The upper-body element may be formed from a single material, preferably a metal. The first handle 146 and second handle 150 are formed from, or coated with, a material with low thermal conductivity, for example a thermosetting plastic.

To use the coffee maker, the inner body element 136 is removed from the container 134 after unscrewing the screw threads 140, 141. The container is filled with water to a predetermined level above the screw thread 140 (indicated by a mark on the container wall - not shown). The inner body element is then placed into the container and the screw threads 140, 141 engaged, so that some of the water is trapped in the brew water chamber beneath the boiler lid 142, and some of the water is displaced upwards to sit in the cooling chamber above the boiler lid. As the boiler lid is screwed down, a small amount of water is able to flow upwards between the screw threads 140, 141, in order to equalise the pressure above and below the boiler lid. When the screw threads 140, 141, are fully engaged, a water-tight, pressure-tight, seal is formed around the boiler lid by an O-ring 144 made of a suitable material such as high-temperature rubber or silicone.

The domed bottom surface of the boiler lid is shaped to trap a quantity of air when it is placed into the water. As the O-ring forms a seal around the boiler lid, the fluid under the boiler lid is trapped and compressed. As the water is incompressible, the trapped air can instead be compressed, allowing the boiler lid to be screwed down fully for an effective seal.

When the screw threads are engaged, the boiler lid 142 defines the upper wall of the brew-water chamber 102. The water contained in the brew-water chamber is the brew water. When the screw threads are engaged, the lower end of the conduit 116 protrudes below the surface of the brew water. The boiler lid also defines the lower wall of the boiling-water cooling chamber 108. The water above the boiler lid in the boiling-water cooling chamber is cooling water which, when the apparatus is operating, forms boiling water.

This method of filling the apparatus with water ensures that both the brew-water chamber and the boiling-water cooling chamber contain precise, repeatable volumes of water each time the device is used. This leads to consistent brewing parameters, and therefore to consistently brewed coffee. Both water chambers are also filled in a single step, making the device quick and easy to use.

The upper body element 138 is removable from the inner body element 136 by disengaging the bayonet mount 148. Ground coffee beans are placed in the coffee chamber and compressed between two perforated filter plates 152. The upper body element 138 is then reconnected with the inner body element by engaging the bayonet mount.

In order to brew espresso coffee, the coffee-making apparatus, containing water and ground coffee beans, is placed on a stove-top heat source. The heat source supplies heat to a base 158 of the brew-water chamber 102, to heat the brew water. As the brew water is heated to a temperature greater than 100 °C, the steam pressure in the brew-water chamber increases.

As the boiling-water cooling chamber 108 is in thermal contact with the brew-water chamber, the water in the boiling-water cooling chamber is heated by conduction and/or convection of heat from the brew-water chamber. The conduction and/or convection of heat to the boiling-water cooling chamber is sufficiently rapid that the water in the boiling-water cooling chamber is heated to and maintained at its boiling point before the brew-water chamber has reached the threshold pressure, irrespective of the initial temperature of the water in either the brew-water chamber or the boiling-water cooling chamber. Vent 114 allows steam generated in the boiling-water cooling chamber to escape from the chamber, such that, in use, the vapour pressure in the boiling-water cooling chamber is maintained at approximately ambient pressure. The temperature of the boiling water is therefore maintained at a boiling point that corresponds to ambient pressure - approximately 100 °C at sea level.

When the steam pressure in the brew-water chamber reaches 9 bar gauge pressure, the brew water is at a temperature of approximately 175 °C to 185 °C, or about 180 °C. At this pressure, the pressure valve 120 opens, and the brew water is propelled out of the brew-water chamber through the conduit 116.

As the brew water is at a higher temperature than the boiling water in the boiling-water cooling chamber, heat is transferred from the brew water, through the walls of the conduit, to the boiling water in the boiling-water cooling bath. The inventors' measurements indicate that the brew water travels through the conduit at a velocity of approximately 80 mm/s, and spends approximately 4 seconds in the conduit. The high thermal conductivity and appropriate length and diameter of the helical conduit 117 ensures that on passing through the conduit, the temperature of the brew water equilibrates with that of the boiling water at approximately 100 °C.

The air-cooling chamber 125 and the air-cooling fins 126 are in thermal contact with both the boiling-water cooling chamber, which is at a temperature of approximately 100 °C, and the ambient air surrounding the coffee-maker, which is typically at a temperature between 10 °C and 30 °C. The dimensions of the air-cooling chamber and air-cooling fins are chosen such that the air-cooling portion is maintained, in use, at a temperature of approximately 90 °C.

Temperature-equilibrated brew water is delivered from the conduit 118 to the air-cooling chamber 125 at a temperature of approximately 100 °C. As the brew water travels upwards through the air-cooling chamber, it is cooled by a further few degrees centigrade, as heat is conducted from the brew water to the air-cooling fins, where it is dissipated to the surrounding air. The brew water is therefore at a temperature of approximately 93 °C when it reaches the top of the air cooling portion 124. As brew water passes up through the widened portion 154 of the air-cooling portion it spreads out so that it is delivered evenly to the whole coffee chamber. Diffuser plate 128 also functions to distribute the brew water, such that the brew water passes through the plate at an even pressure, and forms a barrier to prevent stray coffee grains entering the air-cooling chamber 125.

The pressure drop along the length of the conduit between the brew-water chamber and the coffee chamber is negligible compared to the driving pressure of 9 bar. Brew water is therefore delivered to the coffee chamber 119 at a temperature of 93 °C and a pressure of 9 bar - optimum conditions for espresso brewing.

After passing through diffuser plate 128, the brew water passes through the lower perforated filter plate 152 and into the ground coffee beans. As the ground coffee beans are compressed between two perforated filter plates, brew water percolates evenly through the coffee and through the upper perforated filter plate 152. As the brew water is under ideal espresso brew conditions of approximately 9 bar and 93 °C, it is infused with the optimum espresso aroma and flavour of the ground coffee beans. The brew water then exits the coffee chamber through the outlet 130 and is delivered to the coffee reservoir 132 as brewed espresso coffee.

If the coffee-making apparatus is operated with coarsely-ground coffee or coffee which is not compressed sufficiently, such that it offers low hydraulic flow resistance, the brew water may pass through the conduit at a higher speed than if finer ground coffee or compressed coffee is used. The coffee-reservoir 133 cover ensures that all liquid is directed from the outlet to the coffee reservoir. Brewed espresso coffee may then be poured from the coffee reservoir through the spout 156.

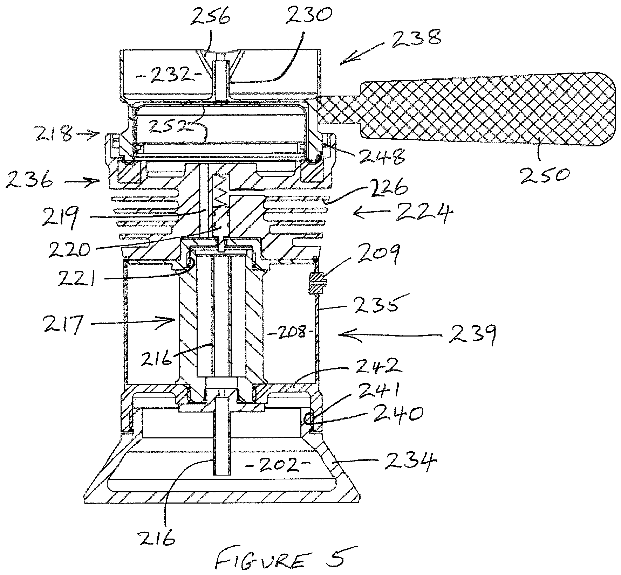

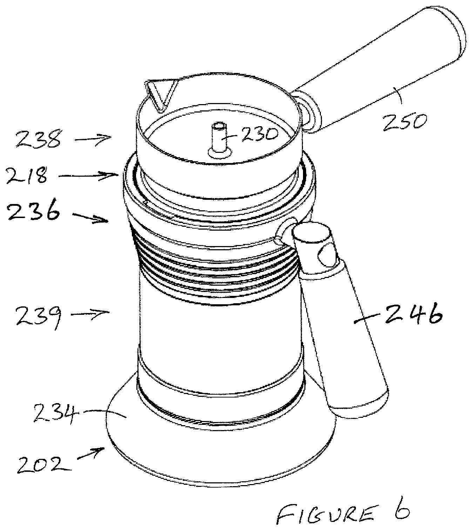

Figures 5 and 6 illustrate a second coffee-making apparatus which does not form part of the present invention.

The coffee-making apparatus comprises, as its base, an open-topped brew-water container 234 formed with an external screw thread 240 around its upper edge. An open-topped cooling-water container 235 comprises a container floor 242 from which a cylindrical side wall of the container extends upwardly, and an internally threaded rim 241 extends downwardly, engageable with the screw thread 240 of the brew-water container so as to form a water-tight, pressure-tight, seal. When the cooling-water container 235 is screwed onto the brew-water container 234, a brew-water chamber 202 is defined below the cooling-water container floor 242.

The brew-water chamber comprises a safety valve (not shown) openable at a pressure of 11 bar, positioned in a side wall of the container or in the cooling-water container floor (the lid of the brew-water chamber).

The cooling-water container 235 forms a boiling-water cooling chamber 208 (when closed as described below). A cooling-chamber pressure valve 209, openable at a pressure of 0.2 bar connects an upper portion of the boiling-water cooling chamber to the atmosphere. The cooling-water container floor 242 is thermally conductive, such that the boiling-water cooling chamber is in thermal contact with the brew-water chamber.

A conduit 216 passes vertically through the cooling-water container floor, with an open end of the conduit protruding into the brew-water chamber. Above the container floor, in the boiling-water cooling chamber, the conduit passes through a heat exchanger 217, the upper end of which comprises an external screw thread 221.

An air-cooler 224 is positioned above the boiling-water cooling chamber, such that a bottom surface of the air-cooler defines a lid of the boiling-water cooling chamber. The bottom surface of the air-cooler comprises a screw thread which is engagable with the external screw thread 221 so as to form water-tight, pressure-tight, seals between the air-cooler and the cylindrical side wall of the cooling-water container, and between the air-cooler and the heat exchanger 217. When the screw threads 221 are engaged, the boiling-water cooling chamber is sealed, and the conduit connects to and forms a channel 219 in the air-cooler. A pressure valve 220, openable at a threshold pressure of 9 bar, is positioned above the boiling-water cooling chamber and closes the conduit such that, in use, it prevents the passage of fluid through the conduit until the water in the brew-water chamber achieves the threshold pressure.

The conduit leads from the heat exchanger upwards through the air-cooler 224, which comprises air-cooling fins 226. Above the air cooler, the conduit opens into a coffee chamber 218. An upper surface of the coffee chamber is in the form of an inverted funnel comprising an outlet 230 beneath a coffee-reservoir cover or lid (not shown). The outlet 230 opens upwards into a coffee reservoir 232, which is situated above the coffee chamber and comprises a spout 256.

The apparatus is separable to allow filling with water. In the preferred embodiment shown in Figures 5 and 6 the apparatus is separable into four components: the brew-water container 234; a lower body element 239 comprising the cooling-water container 235, the conduit 216 and heat exchanger 217; a central body element 236 which comprises the air cooler 224, the pressure valve 220 and a first handle 246; and an upper body element 238 which comprises the coffee chamber 218, the coffee-reservoir 232 and a second handle 250. The lower body element is connectable to and separable from the brew-water container by engaging and disengaging the respective screw threads 240, 241. The central body element 236 is connectable to and separable from the lower body element 239 by engaging and disengaging the respective screw threads 221. The upper body element 238 is connectable to and separable from the central body element at a bayonet mount 248.

In use, the apparatus is first separated into the brew-water container, and the lower, central and upper body elements by disengaging the screw threads and the bayonet mount. Water is placed inside the brew-water container to an indicated level. The lower body element is then placed over the brew-water container and screwed on. Water is placed inside the cooling-water container to an indicated level, either before or after the lower body element is screwed onto the brew-water container.

When the apparatus is assembled, the cooling-water container floor 242 defines the upper surface of the brew-water chamber 202. The water contained in the brew-water chamber is the brew water, and the lower end of the conduit protrudes below the surface of the brew water. The cooling-water container floor also defines the lower surface of the boiling-water cooling chamber 208. The water held above the boiler lid in the boiling-water cooling chamber is cooling water which, when the apparatus is operating, forms boiling water.

When the central body element is screwed on to the lower body element, the cooling-water container is sealed, containing the cooling water.

Ground coffee beans are placed in the coffee chamber and compressed between two perforated filter plates 252. The upper body element 238 is then connected to the central body element by engaging the bayonet mount 248.

In order to brew espresso coffee, the coffee-making apparatus, containing water and ground coffee beans, is placed on a stove-top heat source. The heat source applies heat to the base of the brew-water chamber 202, which heats the brew water by conduction through the chamber wall. As the brew water is heated to a temperature greater than 100 °C, the steam pressure in the brew-water chamber increases. The increasing steam pressure gradually forces brew-water up the conduit and into the heat exchanger, where the pressure valve 220 prevents it from travelling any further. Brew water in the heat exchanger is cooled only to the temperature of the water in the boiling-water cooling chamber.

As the boiling-water cooling chamber is in thermal contact with the brew-water chamber, the water in the boiling-water cooling chamber is heated by conduction and/or convection of heat from the brew-water chamber. In use, the boiling-water cooling chamber thus contains boiling water. When the vapour pressure in the boiling-water cooling chamber exceeds 0.2 bar gauge pressure, the cooling-chamber pressure valve 209 opens, allowing excess steam to escape from the chamber, such that, in use, the vapour pressure in the boiling-water cooling chamber is maintained at approximately 0.2 bar gauge pressure. The temperature of the boiling water is therefore maintained at a boiling point that corresponds to 0.2 bar gauge pressure - approximately 105 °C. This is advantageously independent of the ambient atmospheric pressure.

When the steam pressure in the brew-water chamber reaches 9 bar, the brew water in the chamber is at a temperature of approximately 180 °C. At this pressure, the pressure valve 220 opens, and the resulting pressure difference across the valve causes brew water to be propelled out of the brew-water chamber, through the conduit.

As the brew water is at a higher temperature than the boiling water in the boiling-water cooling chamber, heat is transferred from the brew water, through the walls of the heat exchanger, to the boiling water in the boiling-water cooling bath. The high thermal conductivity, and appropriate length and diameter, of the heat exchanger ensures that on passing through the conduit, the temperature of the brew water substantially equilibrates with that of the boiling water at approximately 105 °C.

Temperature-equilibrated brew water is delivered from the heat exchanger to the air-cooler at a temperature of approximately 105 °C. As the brew water travels up the channel 219 through the air-cooler, it is cooled by a further few degrees centigrade, as heat is transferred from the brew water to the air-cooling fins, where it is dissipated to the surrounding air. Brew water is therefore at a temperature of approximately 93 °C when it reaches the top of the air cooler 224 and is delivered to the coffee chamber 218.

The air cooler is advantageously designed such that the rate of heat dissipation from the brew water and the brew-water flow rate are matched, in such a way that a brew-water temperature drop of approximately 10 °C is achieved, dropping the temperature from approximately 103 °C to 93 °C.

Assuming that the mass of brew water used to make a double espresso is 62 g and that the brewing process will occur over a period of 30 s, then the air cooler is designed to remove heat from the brew water at a rate of between 75 and 100 Watts, or of approximately 87 Watts, which given that water has a specific heat capacity of approximately 4.2 kJ/kgK would result in the brew water temperature being reduced by 10 °C. If the brew water leaving the boiling-water cooling chamber is at a temperature of 103 °C, then the brew water is cooled in the air-cooling chamber to a temperature of 93 °C. The cooling rate of 87 Watts is achieved by conduction of heat from the brew water to the body of the air-cooling chamber, which is then subsequently transferred to the ambient air, by convection, via the air cooling fins.

The pressure drop between the brew-water chamber and the coffee chamber is preferably negligible compared to the driving pressure of 9 bar. Brew water is therefore delivered to the coffee chamber at a temperature of 93 °C and a pressure of 9 bar - optimum conditions for espresso brewing.

As it is delivered out of the conduit into the coffee chamber, the brew water passes through the lower perforated filter plate 252 and into the ground coffee beans. Brew water then percolates upwards through the coffee and the upper perforated filter plate 252 before exiting the coffee chamber through the outlet 230 and being delivered to the coffee reservoir 232 as brewed espresso coffee.

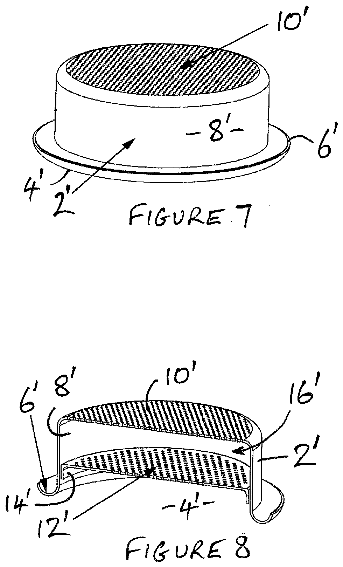

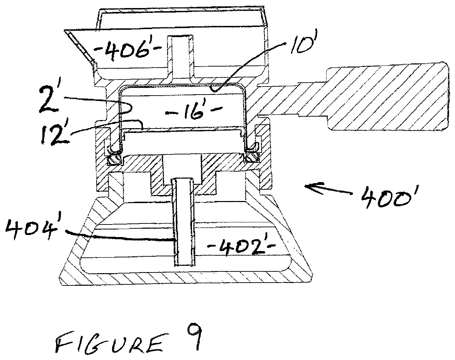

Figures 7 and 8 show a third embodiment of the invention, comprising an inverted container, or filter basket, 2' for the production of espresso coffee. Figure 8 shows the same inverted container in which a perforated filter plate 12' is positioned. Figure 9 shows the inverted container and the perforated filter plate in a coffee-making apparatus of the stove-top percolator type.

The container 2' comprises a cylindrical side-wall 8' with a circular cross-section, which extends from an open inlet-end 4' to a flat perforated outlet-wall 10' which closes the upper end of the container, with the container oriented as shown in the Figures. A rounded lip, or external flange, 6' extends from the side wall at the inlet-end.

Figure 8 shows the perforated filter plate 12' positioned inside the container parallel to the outlet-wall. The perforated filter plate comprises a peripheral rim 14' which extends parallel to and abuts the side-wall of the container. The peripheral rim forms an interference fit with the side wall of the container, such that friction between the rim and the side wall holds the filter plate in position in the container. The filter plate is positionable in the container by push-fitting, and its position, or height, in the container may be altered by a user. When the perforated filter plate is positioned in the container, a chamber 16' is formed between the container and the filter plate. The volume of the chamber can be varied by altering the position of the perforated filter plate.

The container is locatable in a coffee-making apparatus 400', as shown in Figure 9. The container, in use, contains a source of coffee, such as ground coffee, which is tamped and then held in place by the perforated filter plate. In the example apparatus shown in Figure 9, water in a brew-water chamber 402' is heated by placing the apparatus on a stove top. When the water boils, pressure in the brew-water chamber drives the brew water upwardly through a conduit 404' leading to the container and the filter plate, and upwardly through the source of coffee held in the chamber 16' between them. Brewed coffee is collected in a reservoir 406' above the container. The present invention is not limited to the use of a stove-top percolator but could be used with any source of brew water.

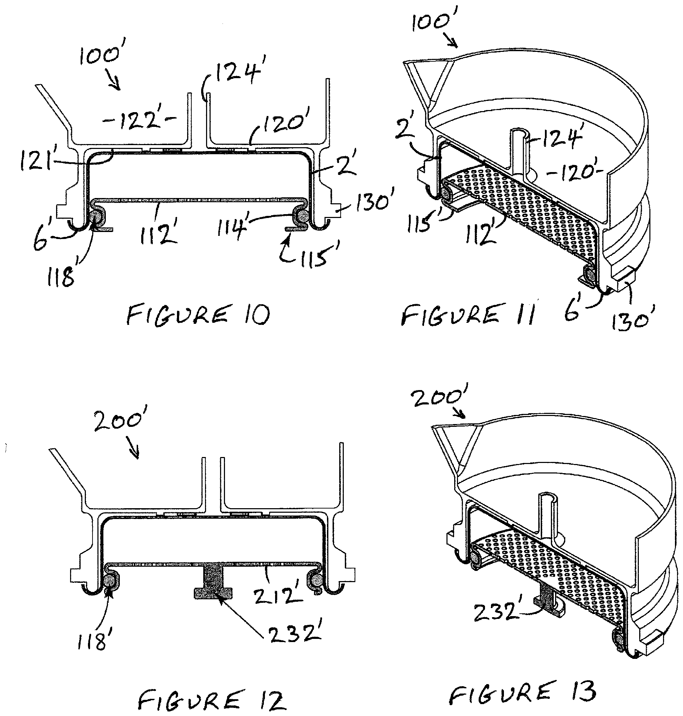

A further coffee-filter apparatus 100' embodying the present invention is illustrated in Figures 10 and 11. The apparatus comprises an inverted container 2' as described with reference to Figure 7, but the apparatus comprises a different perforated filter plate 112' from that shown in Figures 7 and 8. The perforated filter plate 112' is substantially flat and circular in shape, and comprises a plurality of perforations through which liquid may flow. The filter plate also comprises a rim 114' around the periphery of the plate and shaped to define an outwardly-facing circumferential recess in which a resilient member, formed by a rubber O-ring 118' is located. The diameter of the filter plate is such that the rubber O-ring abuts and is urged against the side-wall of the container.

The perforated filter plate is insertable into, and removable from, the container through the open inlet-end, and may be positioned at any height between the inlet-end and the outlet-wall of the container. The rim also provides an inwardly-extending flange, or raised edge, 115' that can be gripped by a user, in order to allow the user to insert or remove the perforated filter plate from the container.

In use, the inverted container 2' is receivable in a downwardly-facing cylindrical recess 121' formed in a body element 120', beneath a coffee reservoir 122'. To make coffee, brew water is delivered upwardly into the recess, passes through the inverted container, and through a coffee outlet 124' leading from the recess into the coffee reservoir. When the container is received in the recess, the perforated outlet-wall of the container is proximate to the coffee outlet 124' and the rounded lip 6' of the container abuts a corresponding cylindrical rim of the body element to locate the container accurately in position.

The body element also comprises a bayonet fitting 130' to allow the apparatus to be removably attached to a coffee-maker, above a source of heated, pressurised brew water.

In alternative embodiments, the container may be held in the body element by means of a screw thread or a resilient member, for example, a rubber O-ring or a wire spring (such as a circular wire spring) positioned between a wall of the body element and the side-wall of the container.

In a further embodiment of the coffee-filter apparatus 200' illustrated in Figures 12 and 13, a fifth embodiment of a perforated filter plate 212' additionally comprises a handle 232' to facilitate, in use, positioning of the filter plate by a user.

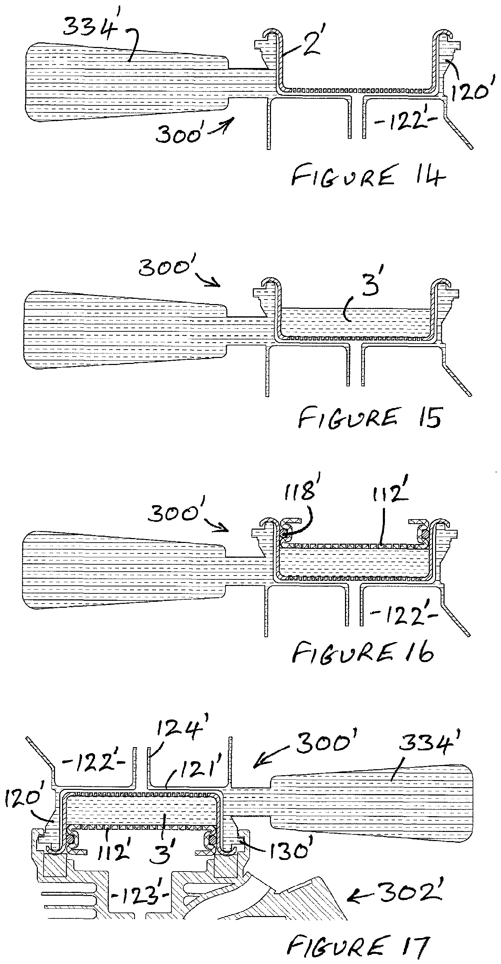

Figures 14 to 17 show an embodiment of a coffee-filter apparatus 300' at different stages of use, and thus illustrate a method of making coffee embodying the present invention. This filter apparatus is based on the fourth embodiment described above, with reference to Figures 10 and 11.

Figure 14 illustrates the coffee-filter apparatus prior to use, at which point the container 2' is upright, with its open inlet-end above the perforated outlet-wall. The container 2' is fitted into a correspondingly-shaped recess of a body element 120', where it is held by frictional forces. In this configuration, the coffee reservoir 122' is upside down, and the apparatus can conveniently stand on the side-wall of the coffee reservoir. A handle 334' extends horizontally from the body element to allow manipulation of the apparatus by a user. At this stage prior to use, the perforated filter plate is not positioned in the container.

Figure 15 illustrates the apparatus after ground roasted coffee beans 3' have been introduced to the container 2' and compacted, or tamped, against the perforated outlet-wall of the container. The amount of ground coffee, or coffee grounds, used is chosen according to the desired strength of the resulting beverage, with a greater amount of ground coffee leading to a stronger-tasting beverage. Once ground coffee has been placed in the container, its upper surface is tamped downwards towards the container's outlet-wall with a force of approximately 100 N. The step of compacting the ground coffee eliminates void spaces between the coffee grounds, and creates an approximately even distribution of coffee throughout the container. As shown in Figure 15, following tamping the upper and lower surfaces of the ground coffee are level and parallel to one another.

In Figure 16, the perforated filter plate 112' has been positioned in the container by push-fitting, such that it abuts the surface of the ground coffee. The perforated filter plate is held in position by the O-ring 118' encircling the perforated filter plate 112'.

The coffee-filter apparatus is then inverted, such that the perforated filter plate is below the ground coffee, the perforated outlet-wall is above the ground coffee and the coffee outlet is above the perforated outlet-wall. The friction between the O-ring and the container is of sufficient magnitude that the perforated filter plate remains in place on inversion of the apparatus.

In Figure 17, the apparatus has been inverted and attached to an upward-flow coffee-maker (partially shown at 302') using the bayonet fitting 130'.

In use, brew water is then supplied by the upward-flow coffee maker at a temperature of approximately 95 °C and a pressure of 9 bar gauge (this pressure is not achievable by the apparatus of Figure 9, but is desirable for coffee making and can be provided by other conventional coffee-making apparatus), and is introduced to the apparatus through the water inlet 123'. The water flows upwardly through the water inlet to the perforated filter plate 112', which acts as a diffuser so that the 9 bar water pressure is applied evenly across the surface of the filter plate. The force of the brew water compresses the ground coffee in the same direction as it has already been tamped, increasing the hydraulic resistance of the ground coffee. Water is then forced to flow up through the perforations in the filter plate, at which point it comes into contact with the ground coffee 3'. As it percolates upwards through the ground coffee, the brew water extracts flavour and aroma from the ground coffee. When the brew water reaches the outlet-wall 121' of the container it flows through the perforations in the outlet-wall and through the coffee-outlet 124' as brewed espresso coffee. Coffee flowing out of the coffee outlet is collected in the coffee reservoir 122'.

## Claims

1. A coffee-making apparatus comprising:
a brew-water chamber (102) for containing brew water (4);
a boiling-water cooling chamber (108) for containing boiling water (10);
a coffee chamber (119) for containing a source of coffee (22);
a conduit (116) leading from the brew-water chamber (2) to the coffee chamber (119), the conduit comprising a heat exchange portion (117) in thermal contact with the boiling-water cooling chamber (108); and
a pressure valve (120), openable at a threshold pressure in the brew-water chamber at which the pressure in the brew-water chamber (102) is greater than or equal to 4 bar, and the temperature of the brew water (4) is greater than the temperature of the boiling water (10) in the boiling-water cooling chamber (108), to allow brew water to flow from the brew-water chamber through the conduit;
in which the brew-water chamber (102) and the boiling-water cooling chamber (8) are defined within a common container (134) and separated by a dividing wall that is insertable into the common container;
in which the apparatus is configured so that brew water (4) passing from the brew-water chamber through the conduit to the coffee chamber is cooled by heat flow to the boiling water (10) in the boiling-water cooling chamber

2. A coffee-making apparatus according to claim 1, in which the brew water (4) passing from the brew-water chamber (2) through the conduit (116) to the coffee chamber (118) is cooled so that its temperature equilibrates with the temperature of the boiling water (10) in the boiling-water cooling chamber (8)

3. A coffee-making apparatus according to claim 1 or 2, comprising a further cooling portion, such as an air-cooling portion and/or a thermal-capacitor portion, configured such that the brew water (4) is cooled by the further cooling portion after cooling by the boiling-water cooling chamber (108).

4. A coffee-making apparatus according to claim 1, 2 or 3, in which the boiling-water cooling chamber (8) is heatable by conduction of heat from the brew-water chamber (102) in order to raise the boiling water (10) to its boiling point, and/or in which the coffee-making apparatus comprises a boiling-water cooling chamber heater (12) for heating the boiling water in the boiling-water cooling chamber.

5. A coffee-making apparatus according to any preceding claim, in which the pressure valve (120) is upstream of the coffee chamber and preferably upstream of the boiling-water cooling chamber (8).

6. A coffee-making apparatus according to any preceding claim in which the pressure valve (120) is configured to open when the pressure in the brew-water chamber (2) is greater than or equal to 5, 6, 7, 8, 9, 10, 11, 12, 13, 14 or 15 bar, and/or in which the pressure valve is adjustable to open at different threshold pressures, so that the brew water (4) leaving the brew-water chamber (102) is preferably at a temperature equal to or greater than 150 °C, or 170°C , or 210 °C.

7. A coffee-making apparatus according to any preceding claim comprising a safety valve openable at a predetermined safety pressure to allow the contents of the brew-water chamber (102) to be vented to the boiling-water cooling chamber (8).

8. A coffee-makino apparatus according to any preceding claim, in which the boiling-water cooling chamber (108) is closed by a cooling-chamber pressure valve (114) openable at a predetermined pressure.

9. A coffee-making apparatus according to any preceding claim, in which the boiling-water cooling chamber (108) is between the brew-water chamber (102) and the coffee chamber, preferably in which the coffee chamber is above the boiling-water cooling chamber.

10. A coffee-making apparatus according to any preceding claim, in which the dividing wall comprises a brew-water chamber lid (142).

11. A method of making coffee using a coffee making apparatus according to any preceding claim, comprising the steps of:
placing water in the common container (134);
inserting the dividing wall into the common container (134) to define the brew-water chamber (102) and the boiling-water cooling chamber (108);
heating brew water (4) contained in the brew-water chamber (102) until it reaches a threshold pressure greater than or equal to 4 bar and a temperature greater than the temperature of the boiling water (10) in the boiling-water cooling chamber (108), at which the brew water (4) flows out of the brew-water chamber;
cooling the brew water by allowing heat to flow from the brew water to a body of boiling water (10) in the boiling-water cooling chamber (108); and bringing the brew water into contact with a source of coffee (22) in the coffee chamber (119).

12. A method of making coffee according to claim 11, in which the brew water (4) is cooled until its temperature equilibrates with that of the boiling water (10) in the boiling-water cooling chamber (108).

13. A method of making coffee according to claim 11 or 12, comprising the step of further cooling the brew water (4), after the step of cooling by allowing heat flow to the boiling water (10).

14. A method of making coffee according to claim 11, 12 or 13, comprising the step of raising the body of boiling water (10) to its boiling point by conduction of heat from the brew-water chamber (102), and/or by heating the body of boiling water with a cooling-chamber heater (12).

15. A method of making coffee according to any of claims 11 to 14, in which the threshold pressure is greater than or equal to 5, 6, 7, 8, 9, 10, 11, 12, 13, 14 or 15 bar, preferably in which the brew water (4) flowing out of the brew-water chamber (102) is at a temperature equal to or greater than 150 °C, 170 °C, or 200 °C, and/or in which the body of boiling water (10) is heated to and maintained at a temperature equal to or greater than 100 °C, or 105 °C, or 110 °C, or 115 °C.

## Patentansprüche

1. Vorrichtung zur Herstellung von Kaffeeaufguss, die aufweist:
eine Brühwasserkammer (102) zum Enthalten von Brühwasser (4);
eine Siedewasserkühlkammer (108) zum Enthalten von Siedewasser (10);
eine Kaffeekammer (119) zum Enthalten einer Kaffeequelle (22);
eine Leitung (116), die von der Brühwasserkammer (2) zur Kaffeekammer (119) führt,
wobei die Leitung einen Wärmeaustauschteil (117) in thermischem Kontakt mit der Siedewasserkühlkammer (108) aufweist; und
ein Druckventil (120), das sich bei einem Schwellendruck in der Brühwasserkammer öffnet, bei dem der Druck in der Brühwasserkammer (102) größer als oder gleich 4 bar ist und die Temperatur des Brühwassers (4) höher ist als die Temperatur des Siedewassers (10) in der Siedewasserkühlkammer (108), damit Brühwasser von der Brühwasserkammer durch die Leitung fließen kann;
wobei die Brühwasserkammer (102) und die Siedewasserkühlkammer (8) innerhalb eines gemeinsamen Behälters (134) definiert sind und durch eine Trennwand getrennt sind, die in den gemeinsamen Behälter einsetzbar ist;
wobei die Vorrichtung so konfiguriert ist, dass von der Brühwasserkammer durch die Leitung zur Kaffeekammer laufendes Brühwasser (4) durch Wärmefluss zu dem Siedewasser (10) in der Siedewasserkühlkammer gekühlt wird.

2. Vorrichtung zur Herstellung von Kaffeeaufguss nach Anspruch 1, wobei das von der Brühwasserkammer (2) durch die Leitung (116) zur Kaffeekammer (118) laufende Brühwasser gekühlt wird, so dass seine Temperatur mit der Temperatur des Siedewassers (10) in der Siedewasserkühlkammer (8) abgeglichen wird.

3. Vorrichtung zur Herstellung von Kaffeeaufguss nach Anspruch 1 oder 2, die einen weiteren Kühlteil aufweist, wie etwa einen Luftkühlteil und/oder einen thermischen Kondensatorteil, der so konfiguriert ist, dass das Brühwasser (4) nach dem Kühlen durch die Siedewasserkühlkammer (108) durch den weiteren Kühlteil gekühlt wird.

4. Vorrichtung zur Herstellung von Kaffeeaufguss nach Anspruch 1, 2 oder 3, wobei die Siedewasserkühlkammer (8) durch Wärmeübertragung von der Brühwasserkammer (102) erhitzt werden kann, um das Siedewasser (10) auf seinen Siedepunkt zu bringen, und/oder wobei die Vorrichtung zur Herstellung von Kaffeeaufguss einen Siedewasserkühlkammererhitzer (12) zur Erhitzung des Siedewassers in der Siedewasserkühlkammer aufweist.

5. Vorrichtung zur Herstellung von Kaffeeaufguss nach einem der vorhergehenden Ansprüche, wobei das Druckventil (120) sich zuströmseitig der Kaffeekammer befindet und vorzugsweise sich zuströmseitig der Siedewasserkühlkammer (8) befindet.

6. Vorrichtung zur Herstellung von Kaffeeaufguss nach einem der vorhergehenden Ansprüche, wobei das Druckventil (120) konfiguriert ist, um sich zu öffnen, wenn der Druck in der Brühwasserkammer (2) größer oder gleich 5, 6, 7, 8, 9, 10, 11, 12, 13, 14 oder 15 bar ist, und/oder wobei das Druckventil verstellbar ist, so dass es sich bei verschiedenen Schwellendrücken öffnet, damit das die Brühwasserkammer (102) verlassende Brühwasser (4) vorzugsweise auf einer Temperatur von gleich 150 °C oder 170 °C oder 210 °C oder höher ist.

7. Vorrichtung zur Herstellung von Kaffeeaufguss nach einem der vorhergehenden Ansprüche, die ein Sicherheitsventil aufweist, das sich bei einem vorbestimmten Sicherheitsdruck öffnet, um das Ablassen des Inhalts der Brühwasserkammer (102) in die Siedewasserkühlkammer (8) zu ermöglichen.

8. Vorrichtung zur Herstellung von Kaffeeaufguss nach einem der vorhergehenden Ansprüche, wobei die Siedewasserkühlkammer (108) durch ein Kühlkammerdruckventil (114) verschlossen ist, das sich bei einem vorbestimmten Druck öffnet.

9. Vorrichtung zur Herstellung von Kaffeeaufguss nach einem der vorhergehenden Ansprüche, wobei die Siedewasserkühlkammer (108) zwischen der Brühwasserkammer (102) und der Kaffeekammer liegt, vorzugsweise wobei die Kaffeekammer über der Siedewasserkühlkammer angeordnet ist.

10. Vorrichtung zur Herstellung von Kaffeeaufguss nach einem der vorhergehenden Ansprüche, wobei die Trennwand einen Brühwasserkammerdeckel (142) aufweist.

11. Verfahren zur Herstellung von Kaffeeaufguss unter Verwendung einer Vorrichtung zur Herstellung von Kaffeeaufguss nach einem der vorhergehenden Ansprüche, das die folgenden Schritte aufweist:
Geben von Wasser in den gemeinsamen Behälter (134);
Einsetzen der Trennwand in den gemeinsamen Behälter (134), um die Brühwasserkammer (102) und die Siedewasserkühlkammer (108) zu definieren;
Erhitzen von in der Brühwasserkammer (102) enthaltenem Brühwasser (4), bis es einen Schwellendruck, der größer als oder gleich 4 bar ist, und eine höhere Temperatur als die Temperatur des Siedewassers (10) in der Siedewasserkühlkammer (108), bei der das Brühwasser aus der Brühwasserkammer fließt, erreicht;
Kühlen des Brühwassers durch Ermöglichen von Wärmefluss von dem Brühwasser zu einem Siedewasserkörper (10) in der Kühlwasserkühlkammer (108); und
Bringen des Brühwassers in Kontakt mit einer Kaffeequelle (22) in der Kaffeekammer (119).

12. Verfahren zur Herstellung von Kaffeeaufguss nach Anspruch 11, wobei das Brühwasser (4) gekühlt wird, bis seine Temperatur mit der des Siedewassers (10) in der Siedewasserkühlkammer (108) abgeglichen ist.

13. Verfahren zur Herstellung von Kaffeeaufguss nach Anspruch 11 oder 12, das den Schritt des weiteren Kühlens des Brühwassers (4), nach dem Schritt des Kühlens, durch Ermöglichen von Wärmefluss zu dem Siedewasser (10) aufweist.

14. Verfahren zur Herstellung von Kaffeeaufguss nach Anspruch 11, 12 oder 13, das den Schritt des Bringens des Siedewasserkörpers (10) auf seinen Siedepunkt durch Wärmeübertragung von der Brühwasserkammer (102) und/oder durch Erhitzen des Siedewasserkörpers mit einem Kühlkammererhitzer (12) aufweist.

15. Verfahren zur Herstellung von Kaffeeaufguss nach einem der Ansprüche 11 bis 14, wobei der Schwellendruck größer als oder gleich 5, 6, 7, 8, 9, 10, 11, 12, 13, 14 oder 15 bar ist, vorzugsweise wobei das aus der Brühwasserkammer (102) fließende Brühwasser (4) auf einer Temperatur ist, die gleich 150 °C, 170 °C oder 200 °C oder höher ist und/oder wobei der Siedewasserkörper (10) auf eine(r) Temperatur erhitzt und gehalten wird, die gleich 100 °C oder 105 °C oder 110 °C oder 115 °C oder höher ist.

## Revendications

1. Appareil pour préparer le café comprenant :
une chambre d'eau d'infusion (102) destinée contenir de l'eau d'infusion (4) ;
une chambre de refroidissement d'eau bouillante (108) destinée à contenir de l'eau bouillante (10) ;
une chambre à café (119) destinée à contenir une source de café (22) ;
un conduit (116) menant de la chambre d'eau d'infusion (2) à la chambre à café (119), le conduit comprenant une partie d'échange thermique (117) en contact thermique avec la chambre de refroidissement d'eau bouillante (108) ; et
une soupape de pression (120), pouvant s'ouvrir à une pression seuil dans la chambre d'eau d'infusion au niveau de laquelle la pression dans la chambre d'eau d'infusion (102) est supérieure ou égale à 4 bars, et la température de l'eau d'infusion (4) est supérieure à la température de l'eau bouillante (10) dans la chambre de refroidissement d'eau bouillante (108), pour permettre à l'eau d'infusion de s'écouler de la chambre d'eau d'infusion à travers le conduit ;
dans lequel la chambre d'eau d'infusion (102) et la chambre de refroidissement d'eau bouillante (8) sont définies à l'intérieur d'un récipient commun (134) et séparées par une paroi de séparation qui peut être insérée dans le récipient commun ;
l'appareil étant configuré de telle sorte que l'eau d'infusion (4) passant de la chambre d'eau d'infusion à travers le conduit jusqu'à la chambre à café soit refroidie par un flux de chaleur vers l'eau bouillante (10) dans la chambre de refroidissement d'eau bouillante.

2. Appareil pour préparer le café selon la revendication 1, dans lequel l'eau d'infusion (4) passant de la chambre d'eau d'infusion (2) à travers le conduit (116) jusqu'à la chambre à café (118) est refroidie de telle sorte que sa température s'équilibre avec la température de l'eau bouillante (10) dans la chambre de refroidissement d'eau bouillante (8).

3. Appareil pour préparer le café selon la revendication 1 ou 2, comprenant une partie de refroidissement supplémentaire, telle qu'une partie de refroidissement par air et/ou une partie de condensateur thermique, configurée de telle sorte que l'eau d'infusion (4) soit refroidie par la partie de refroidissement supplémentaire après refroidissement par la chambre de refroidissement d'eau bouillante (108).

4. Appareil pour préparer le café selon la revendication 1, 2 ou 3, dans lequel la chambre de refroidissement d'eau bouillante (8) peut être chauffée par conduction de la chaleur provenant de la chambre d'eau d'infusion (102) afin d'élever l'eau bouillante (10) à son point d'ébullition, et/ou l'appareil pour préparer le café comprenant un réchauffeur de chambre de refroidissement d'eau bouillante (12) pour chauffer l'eau bouillante dans la chambre de refroidissement d'eau bouillante.

5. Appareil pour préparer le café selon l'une quelconque des revendications précédentes, dans lequel la soupape de pression (120) se trouve en amont de la chambre à café et de préférence en amont de la chambre de refroidissement d'eau bouillante (8).

6. Appareil pour préparer le café selon l'une quelconque des revendications précédentes, dans lequel la soupape de pression (120) est configurée pour s'ouvrir lorsque la pression dans la chambre d'eau d'infusion (2) est supérieure ou égale à 5, 6, 7, 8, 9, 10, 11, 12, 13, 14 ou 15 bars, et/ou dans lequel la soupape de pression est réglable pour s'ouvrir à différentes pressions seuils, de telle sorte que l'eau d'infusion (4) sortant de la chambre d'infusion (102) soit de préférence à une température égale ou supérieure à 150 °C, ou 170 °C, ou 210 °C.

7. Appareil pour préparer le café selon l'une quelconque des revendications précédentes, comprenant une soupape de sécurité pouvant s'ouvrir à une pression de sécurité prédéterminée pour permettre l'évacuation du contenu de la chambre d'eau d'infusion (102) vers la chambre de refroidissement d'eau bouillante (8).

8. Appareil pour préparer le café selon l'une quelconque des revendications précédentes, dans lequel la chambre de refroidissement d'eau bouillante (108) est fermée par une soupape de pression de chambre de refroidissement (114) pouvant s'ouvrir à une pression prédéterminée.

9. Appareil pour préparer le café selon l'une quelconque des revendications précédentes, dans lequel la chambre de refroidissement d'eau bouillante (108) se trouve entre la chambre d'eau d'infusion (102) et la chambre à café, de préférence dans lequel la chambre à café se trouve au-dessus de la chambre de refroidissement d'eau bouillante.

10. Appareil pour préparer le café selon l'une quelconque des revendications précédentes, dans lequel la paroi de séparation comprend un couvercle de chambre d'eau d'infusion (142).

11. Procédé pour préparer le café à l'aide d'un appareil pour préparer le café selon l'une quelconque des revendications précédentes, comprenant les étapes suivantes :
le placement d'eau dans le récipient commun (134) ;
l'insertion de la paroi de séparation dans le récipient commun (134) pour définir la chambre d'eau d'infusion (102) et la chambre de refroidissement d'eau bouillante (108) ;
le chauffage de l'eau d'infusion (4) contenue dans la chambre d'eau d'infusion (102) jusqu'à ce qu'elle atteigne une pression seuil supérieure ou égale à 4 bars et une température supérieure à la température de l'eau bouillante (10) dans la chambre de refroidissement d'eau bouillante (108), au niveau de laquelle l'eau d'infusion (4) s'écoule hors de la chambre d'eau d'infusion ;
le refroidissement de l'eau d'infusion en laissant la chaleur s'écouler de l'eau d'infusion vers une masse d'eau bouillante (10) dans la chambre de refroidissement d'eau bouillante (108) ; et
la mise en contact de l'eau d'infusion avec une source de café (22) dans la chambre à café (119).

12. Procédé pour préparer le café selon la revendication 11, dans lequel l'eau d'infusion (4) est refroidie jusqu'à ce que sa température s'équilibre avec celle de l'eau bouillante (10) dans la chambre de refroidissement d'eau bouillante (108).

13. Procédé pour préparer le café selon la revendication 11 ou 12, comprenant l'étape de refroidissement supplémentaire de l'eau d'infusion (4), après l'étape de refroidissement en laissant l'eau bouillante (10) s'écouler vers l'eau bouillante (10).

14. Procédé pour préparer le café selon la revendication 11, 12 ou 13, comprenant l'étape d'élévation de la masse d'eau bouillante (10) à son point d'ébullition par conduction de la chaleur provenant de la chambre d'eau d'infusion (102), et/ou en chauffant la masse d'eau bouillante avec un élément de chauffage de chambre de refroidissement (12).

15. Procédé pour préparer le café selon l'une quelconque des revendications 1 à 14, dans lequel la pression seuil est supérieure ou égale à 5, 6, 7, 8, 9, 10, 1 1, 12, 13, 14 ou 15 bars, dans lequel de préférence l'eau d'infusion (4) s'écoulant de la chambre d'eau d'infusion (102) est à une température égale ou supérieure à 150 °C, 170 °C, ou 200 °C, et/ou dans lequel la masse d'eau bouillante (10) est chauffée et maintenue à une température égale ou supérieure à 100 °C, ou 105 °C, ou 110 °C, ou 115 °C.
